(19) Europäisches Patentamt
European Patent Office
Office européen des brevets

(11) EP 3 960 441 A1

(12) EUROPÄISCHE PATENTANMELDUNG

(43) Veröffentlichungstag:
02.03.2022  Patentblatt 2022/09

(21) Anmeldenummer: 21192720.7

(22) Anmeldetag: 24.08.2021

(51) Internationale Patentklassifikation (IPC):
**B32B 17/10** (2006.01)

(52) Gemeinsame Patentklassifikation (CPC):
**B32B 17/10036; B32B 17/10091; B32B 17/10119; B32B 17/10137; B32B 17/10165; B32B 17/10293**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **25.08.2020  DE 102020122233**
**25.08.2020  DE 202020104913 U**

(71) Anmelder: **SCHOTT AG**
**55122 Mainz (DE)**

(72) Erfinder:
• **BRANDT-SLOWIK, Dr.-Ing. Juliane**
**07745 Jena (DE)**
• **ZACHAU, Dr. Thilo**
**07778 Neuengönna (DE)**
• **WIESEKE, Hubert**
**07619 Schkölen (DE)**

(74) Vertreter: **Blumbach · Zinngrebe Patentanwälte PartG mbB**
**Alexandrastraße 5**
**65187 Wiesbaden (DE)**

(54) **FAHRZEUGSCHEIBE MIT ERHÖHTER BELASTBARKEIT GEGENÜBER UMWELTEINFLÜSSEN**

(57)    Die Erfindung betrifft eine Fahrzeugscheibe, insbesondere eine Kraftfahrzeugscheibe, umfassend ein Borosilicatglas, insbesondere eine durch ein Floatverfahren hergestellte Borosilicatglasscheibe mit einer Dicke zwischen 1,1 mm und 5,4 mm, einem flächigen Bereich für einen diesem flächigen Bereich zugeordneten Sensor, insbesondere optischen Sensor, vorzugsweise bildgebenden optischen Sensor, bei welcher die Neigung ($\alpha$) zumindest dieses flächigen Bereichs gegenüber einer senkrecht zu einer Hauptbewegungsrichtung (V) des Fahrzeugs aufwärts verlaufenden Richtung (S), insbesondere vertikal aufwärts zu einer Hauptbewegungsrichtung (V) des Fahrzeugs verlaufenden Richtung, in einem Bereich zwischen 35° und 65°, bevorzugt zwischen 40° und 60° liegt.

Figur 1

EP 3 960 441 A1

**Beschreibung**

Die Erfindung betrifft eine Fahrzeugscheibe umfassend ein Borosilicatglas, eine Anordnung sowie einen Verbund mit dieser Fahrzeugscheibe.

Fahrzeugscheiben unterliegen während des normalen Betriebs eines Kraftfahrzeugs vielen verschiedenartigen Umwelteinflüssen, welche auch mechanische Belastungen beispielsweise durch auf diese auftreffende Partikel umfassen.

Diese Partikel können regelmäßig von verschiedener Form, Größe und Härte sein, jedoch existieren typische Belastungssituationen, welche einen typischen Schädigungscharakter an der Oberfläche der Fahrzeugscheibe aufweisen und dauerhaft hinterlassen.

Häufig wird beispielsweise bei innerörtlichen oder innerstädtischen Straßenbauarbeiten Splitt über frisch geteerte neue Straßenabschnitte aufgebracht und kann beispielsweise durch vorausfahrenden Verkehr aufgewirbelt und gegen nachfolgende Fahrzeuge geschleudert werden.

Besonders empfindlich können hierbei Verglasungen, insbesondere Verglasungen, welche mineralische Gläser umfassen reagieren, da diese Splittpartikel in der Regel eine höhere Härte als übliche Kraftfahrzeugscheiben aufweisen.

Darüber hinaus hält eine zunehmend komplexere Sensorik, insbesondere mit optischen Sensoreinrichtungen, oft zusammen mit Fahrassistenzsystemen mehr und mehr Einzug in heutige Kraftfahrzeuge, insbesondere um diese sicherer und ohne vermeidbare Beeinträchtigungen im Straßenverkehr bewegen zu können.

Gerade diese sensorischen Einrichtungen und auch Fahrassistenzsysteme sind jedoch auf eine zuverlässige Datenerfassung angewiesen, welche in vielen Fällen im Fahrzeug selbst, häufig sogar direkt hinter dessen Frontscheibe erfolgt.

Somit kommt der Qualität der Frontscheibe als sensorischem Interface zwischen dem Inneren und dem Äußeren des Fahrzeugs zunehmende Bedeutung zu.

Soweit diese optischen sensorischen Einrichtungen bilderfassende Systeme umfassen oder zumindest einen Teil von diesen bilden, ist die nötige Bildqualität für eine korrekte sensorische Erkennung durch nachfolgende Systeme von wesentlicher Bedeutung, wobei es dabei in der Regel nötig ist, insbesondere eine ausreichende optische Auflösung bei entsprechendem Kontrast dauerhaft bereitstellen zu können.

Wird jedoch innerhalb dieses optischen Interfaces zwischen dem Äußeren und dem Inneren eines Fahrzeugs Streulicht generiert und den bildgebenden Anteilen des sensorisch erfassten Lichts überlagert, kann dies den Kontrast des von der bildgebenden Einrichtung bereitgestellten Bildes erheblich mindern.

Besonders prekär kann dies in Situationen werden, in welchen sehr helle, insbesondere punktförmige Lichtquellen zusammen mit wesentlich weniger hellen Bildbereichen aufgezeichnet werden sollen. Diese Situation tritt regelmäßig bei Dunkelheit und entgegenkommenden Fahrzeugen oder bei tiefer stehender Sonne auf und kann bei mangelnder Qualität des optischen Interfaces sogar bis zum vollständigen Ausfall der optischen Sensoren führen, insbesondere, wenn durch hohe Streulichtanteile der Kontrast so gemindert wird, dass eine entsprechend sichere Bildgebung oder -verarbeitung nicht mehr möglich ist.

Zusammenfassend lässt sich festhalten, dass Sensoren, die sicher funktionieren sollen, gerade im Zuge von autonomem Fahren gute Sicht brauchen.

Mit der Erfindung soll sichergestellt werden, dass dieser Stör- oder Fremdlichtanteil auch nach mechanischer Beanspruchung und insbesondere Schädigung der Oberfläche noch möglichst gering bleibt.

Dies wird erreicht mit einer Fahrzeugscheibe, insbesondere einer Kraftfahrzeugscheibe, mit einem Borosilicatglas, insbesondere mit einer durch ein Floatverfahren hergestellten Borosilicatglasscheibe mit einer Dicke zwischen 1,1 mm und 5,4 mm, einem flächigen Bereich für einen diesem flächigen Bereich zugeordneten Sensor, insbesondere optischen Sensor, vorzugsweise bildgebenden optischen Sensor, bei welcher die Neigung $\alpha$ zumindest dieses flächigen Bereichs gegenüber einer senkrecht zu einer Hauptbewegungsrichtung V des Fahrzeugs aufwärts verlaufenden Richtung S, insbesondere einer vertikal aufwärts zu einer Hauptbewegungsrichtung (V) des Fahrzeugs verlaufenden Richtung, in einem Bereich zwischen 35° und 65°, bevorzugt zwischen 40° und 60° liegt.

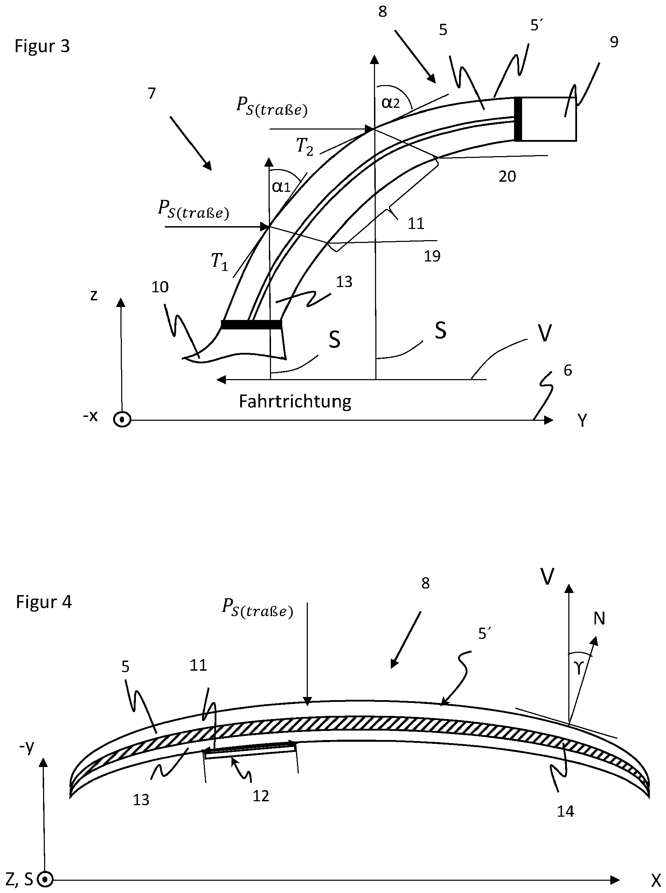

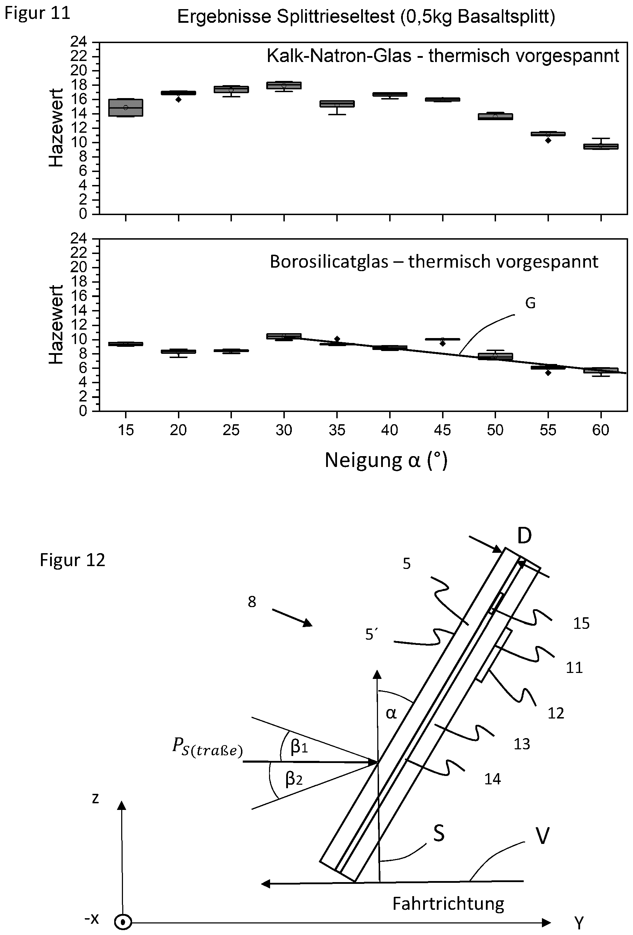

Die Neigung von $\alpha$ wird im Rahmen der vorliegenden Offenbarung von einer senkrecht zur Fahrtrichtung des Fahrzeugs nach oben verlaufenden Richtung ausgehend gemessen und wird, wenn das Fahrzeug, wie in den Figuren 3 und 12 dargestellt nach links fährt im Uhrzeigersinn positiv gezählt. Im Rahmen des in den Figuren dargestellten kartesischen Koordinatensystems mit den jeweils orthogonalen Raumrichtungen X, Y und Z wird ohne Beschränkung der Allgemeinheit und lediglich beispielhaft angenommen, dass sich die aufwärts oder nach oben verlaufende Richtung S in Z-Richtung, somit in vertikaler Richtung aufwärts erstreckt und die Fahrtrichtung des Fahrzeugs in negativer Y-Richtung verläuft.

Vorteilhaft wäre es dabei generell, wenn der absolute Wert des erzeugten Streulichts nicht nur gering, sondern darüber hinaus auch möglichst nur wenig abhängig von der Richtung der Schädigung wäre.

Dann kann oft auch bei gekrümmten Fahrzeugscheiben eine Gebrauchslage für einen Bereich eines Sensors gefunden werden, welche trotz Schädigung zusammen mit den vorstehend genannten Vorteilen auch noch eine möglichst hohe Dauerbetriebsfestigkeit aufweist.

Für die Zwecke der vorliegenden Offenbarung wird auch angenommen, dass die Hauptbewegungsrichtung des Fahrzeugs durch dessen Bewegung parallel zu einer unter dem Fahrzeug befindlichen Ebene, vorzugsweise einer waagerechten Ebene definiert ist, wobei bei der Ermittlung der Hauptbewegungsrichtung die Geschwindigkeit des Fahrzeugs keiner Beschleunigung, wie Erhöhung oder Verminderung von dessen Geschwindigkeit, und keiner Richtungsänderung der Fahrtrichtung des Fahrzeugs unterliegt und wobei die Ebene, zu welcher sich das Fahrzeug parallel bewegt, da vorzugsweise waagerecht verlaufend keine Höhenänderung aufweist und somit nicht zu einem Anstieg oder zu einem Abstieg des Fahrzeugs während dessen Bewegung führt. Hierdurch lässt sich eine sehr präzise Angabe der Neigungswinkel $\alpha$ insbesondere für die Anordnung der Borosilicatglasscheibe an oder in dem Fahrzeug vornehmen, bei welcher durch die Einbaulage der Fahrzeugscheibe deren definiert Ausrichtung relativ zur regelmäßigen Fahrtrichtung des Fahrzeugs ermöglicht wird, und insbesondere auch Prüfungsergebnisse beispielsweise eines Splittrieseltests auf reale Fahrsituationen übertragbar werden. Darüber hinaus erfasst diese Hauptbewegungsrichtung den Großteil der realen Fahrsituationen, in welchen die Fahrtrichtung des die erfindungsgemäße Borosilicatglasscheibe tragenden Fahrzeug nur um geringe Winkel von der vorstehend definierten Hauptbewegungsrichtung abweichen wird.

Bei Fahrzeugen, insbesondere Fahrzeugen, welche einer erhöhten Partikelbelastung ausgesetzt sind, insbesondere bei Fahrzeugen zur Verwendung in einer rauen betrieblichen Umgebung, bei der mehr als 50 % der Partikel aus einem höher als die Borosilicatglasscheibe liegenden Bereich stammen, und welche im Mittel in einem Winkel von $\beta1$ gegenüber der Hauptbewegungsrichtung des Fahrzeugs auftreffen, kann die Neigung $\alpha$ zumindest des dem Sensor zugeordneten flächigen Bereichs gegenüber einer senkrecht zu einer Hauptbewegungsrichtung V des Fahrzeugs aufwärts verlaufenden Richtung S in einem Bereich zwischen 35° + $\beta1$ und 65°, liegen. Derartige Partikelbelastungen können beispielsweise in Steinbrüchen, bei Kiesabbau oder auch in der Landwirtschaft auftreten.

Als Partikel werden hierbei Teilchen angesehen, welche als Festkörper vorliegen und wie diese auch regelmäßig in alltäglichen Fahrsituationen eines Kraftfahrzeugs auftreten. Die vorliegend für die Winkelangaben des vorstehenden und des nachfolgenden Absatzes erwähnten Partikel entsprechen hierbei einstückig vorliegenden Teilchen mit einem Gewicht von etwa 0,1 g also 0,0001 kg, für welche nachfolgend entsprechende Messungen, beispielsweise in einem Splittrieseltest, noch detaillierter erläutert werden. Wenn jedoch mehr als 50 % der Partikel aus einem tiefer als die Borosilicatglasscheibe liegenden Bereich stammen und im Mittel in einem Winkel von $\beta2$ gegenüber der Hauptbewegungsrichtung des Fahrzeugs auftreffen, kann die Neigung $\alpha$ zumindest des dem Sensor zugeordneten flächigen Bereichs gegenüber einer senkrecht zu einer Hauptbewegungsrichtung des Fahrzeugs aufwärts verlaufenden Richtung in einem Bereich zwischen 35° und 60° - $\beta2$ liegt. Derartige Partikelbelastungen können beispielsweise beim Straßen- und Brückenbau auftreten.

Bei bestimmten Ausführungsformen kann die Borosilicatglasscheibe zumindest bereichsweise eine Krümmung aufweisen. In diesen Fällen, sollen innerhalb des einem Sensors zugeordneten flächigen Bereichs befindliche Tangenten $T_1$, $T_2$ der Oberfläche der Borosilicatglasscheibe, gegenüber einer senkrecht zu einer Hauptbewegungsrichtung des Fahrzeugs aufwärts verlaufenden Richtung S eine Neigung $\alpha$ aufweisen, die in einem Bereich zwischen 35° und 60° liegt.

Der dem Sensor zugeordnete flächige Bereich kann sich beispielsweise innerhalb des in Einbaulage definierte oberen Drittels, bevorzugt oberen Fünftels der Borosilicatglasscheibe befinden.

Bei bevorzugten Ausführungsformen kann die Borosilicatglasscheibe thermisch vorgespannt sein. Bei Ausführungsformen mit einer thermisch vorgespannten Borosilicatglasscheibe kann eine oberflächennahe Druckspannung Werte von 100MPa bis 300MPa aufweisen.

Bei weiteren bevorzugten Ausführungsformen kann die Borosilicatglasscheibe chemisch vorgespannt sein. Bei Ausführungsformen mit einer chemisch vorgespannten Borosilicatglasscheibe kann eine oberflächennahe Druckspannung CS Werte von 100MPa bis 300Mpa umfassen. Bei Ausführungsformen mit einer chemisch vorgespannten Borosilicatglasscheibe kann eine Tiefe der Druckspannungszone DoL von 25$\mu$m bis 50$\mu$m betragen.

Vorteilhaft umfasst die Borosilicatglasscheibe ein Borosilicatglas oder besteht aus einem Borosilicatglas, welches eine Zusammensetzung mit den folgenden Komponenten enthält (in Gew.-%):

| | |
|---|---|
| $SiO_2$ | 70 - 87 |
| $B_2O_3$ | 7 - 25 |
| $Na_2O + K_2O$ | 0,5 - 9 |
| $Al_2O_3$ | 0 - 7 |
| CaO | 0 - 3. |

Die nachfolgend, insbesondere unter Bezugnahme auf den Splittrieseltest noch detaillierter dargestellten positiven Eigenschaften des Borosilicatglases können insbesondere mit der vorstehend beschriebenen Zusammensetzung erreicht werden.

Weitere Ausführungsformen der Borosilicatglasscheibe können auch ein Borosilicatglas enthalten oder aus diesem bestehen, welches eine Zusammensetzung mit den folgenden Komponenten (in Gew.-%) aufweist:

| | |
|---|---|
| $SiO_2$ | 70-86 |
| $Al_2O_3$ | 0-5 |
| $B_2O_3$ | 9,0-25 |
| $Na_2O$ | 0,5-5,0 |
| $K_2O$ | 0-1,0 |
| $Li_2O$ | 0-1,0. |

Die vorstehende Zusammensetzung wird in den vorliegend offenbarten Ausführungsformen bevorzugt in Kombination mit einer Zusatzbedingung verwendet. Da diese Zusatzbedingung vorteilhafter in Molprozenten formuliert werden kann, wird zunächst die vorstehend offenbarte Zusammensetzung des Borosilicatglases in Mol-% umgerechnet angegeben.

Angegeben werden dabei für jedes Oxid die eindeutig definierte untere und obere Grenze des Molprozent-Zusammensetzungsbereiches, welcher jeweils auch dem Konzentrationsbereich dieses Oxids in Mol-% entspricht, für den sich eine mit allen o.a. Gewichtsprozent-Zusammensetzungsbereichen entsprechende Molprozent-Zusammensetzung wie folgt beschreiben lässt:

| | |
|---|---|
| $SiO_2$ | 71,8-88,7 |
| $B_2O_3$ | 7,8-22,7 |
| $Al_2O_3$ | 0-3,1 |
| $Na_2O$ | 0,5-5,1 |
| $K_2O$ | 0-0,6 |
| $Li_2O$ | 0,0-2,1. |

Die Zusatzbedingung ergibt sich aus dem nachfolgend detaillierter erläuterten Zusammenhang.

Sowohl Bor- als auch Aluminiumionen haben die Neigung, im Falle des Vorhandenseins von Alkali- und Erdalkalioxiden deren Sauerstoff, somit den zunächst an die Alkali- und Erdalkalioxiden gebundenen Sauerstoff, zu sich herüberzuziehen und in eine tetraedrische Koordination zu gehen. Damit passen die auf diese Weise gebildete Tetraeder besser in das im Wesentlichen von Siliziumoxidtetraedern aufgebaute Netzwerk.

Dabei haben die Aluminiumionen die Priorität, siehe Sebastian Bruns, Tobias Uesbeck, Dominik Weil, Doris Möncke, Leo van Wüllen, Karsten Durst und Dominique de Ligny, Influence of Al2O3 Addition on Structure and Mechanical Properties of Borosilicate Glasses, Front. Mater., 28 July 2020, so dass es Borionen sind, die übrig bleiben, wenn nicht genügend Sauerstoffionen von den Alkali- und Erdalkalioxiden zur Verfügung gestellt werden. Diese Boratome sind dann trigonal koordiniert.

Der Anteil dieses trigonalen Bor berechnet sich in Mol-% wie folgt:

$$C_{B2O3,trigonal} = C_{B2O3} + C_{Al2O3} - C_{Na2O} - C_{K2O} - C_{Li2O}$$

Dabei steht "c" für die jeweilige Konzentration in Mol-%. $C_{B2O3}$ steht für die gesamte Konzentration von $B_2O_3$, $C_{B2O3,trigonal}$ für den nach dieser Rechnung trigonal koordinierten Anteil. Dabei ist somit:

| | |
|---|---|
| $C_{B2O3,trigonal}$ | die Konzentration des trigonal gebundenen Bors in Mol-% |
| $C_{B2O3}$ | die Konzentration des Boroxids $B_2O_3$ in Mol-% |
| $C_{Al2O3}$ | die Konzentration des Aluminiumoxids $Al_2O_3$ in Mol-% |
| $C_{Na2O}$ | die Konzentration des Natriumoxids $Na_2O$ in Mol-% |
| $C_{K2O}$ | die Konzentration des Kaliumoxids $K_2O$ in Mol-% |
| $C_{Li2O}$ | die Konzentration des Lithiumoxids $Li_2O$ in Mol-% |

Die vorstehenden Konzentrationen $C_{B2O3}$, $C_{Al2O3}$, $C_{Na2O}$, $C_{K2O}$, $C_{Li2O}$ entsprechen somit bei sämtlichen vorliegend offenbarten Zusammensetzungsangaben des Borosilicatglases jeweils den in Mol-% angegebenen Zusammensetzungsanteilen des jeweils im tiefgestellten Index angegebenen Oxids.

Es ist vorteilhaft, wenn $c_{B2O3,trigonal}$ größer als Null ist, da sich jeweils drei trigonal koordinierte Boratome zu einer planaren Struktur, somit einem Boroxolring, zusammenfinden, siehe Christian Hermansen, Quantitative Evaluation of Densification and Crack Resistance in Silicate Glasses, Master Thesis, Aalborg University, Denmark, July 5th 2011. Diese Boroxolringe haben die Neigung zu aggregieren, wobei angrenzende Boroxolringe aufeinander gleiten können.

Diese im Borosilicatglasnetzwerk aggregierten Boroxolringe bilden somit Domänen mit geschichteter Struktur. Parallel zu diesen Schichten kann das Glasnetzwerk Kräfte aufnehmen, ohne hierbei Bindungsbrüche zu erleiden. Das Sprödbruchverhalten des Glases wird dadurch verbessert und die vorliegend offenbarte, insbesondere verbesserte Steinschlagfestigkeit erreicht. Ein Nachweis der Boroxol-Struktur-Anteile kann beispielsweise mit einem 11B-MAS-NMR Analyseverfahren erbracht werden.

Die im Borosilicatglasnetzwerk aggregierten Boroxolringe bilden somit mit der nachfolgend angegebenen Bedingung quasi eine Art eines inneres "Schmiermittels". Dies wirkt der Sprödigkeit und damit auch Oberflächenverletzungen entgegen.

Auf der anderen Seite ist ein zu hoher Anteil von trigonalem Bor ungünstig bezüglich der chemischen Beständigkeit, insbesondere der Laugenbeständigkeit, da sich eindiffundierende Hydroxylionen entlang der vorstehend angegebenen "Gleitebenen" dann sehr schnell bewegen können.

Eine ausreichende Laugenbeständigkeit ist jedoch gerade für die Dauerbetriebsfestigkeit von Kraftfahrzeugscheiben wichtig, da diese bei deren Betrieb häufig einer Laugenbelastung unterliegen, welche beispielsweise durch Umwelteinflüsse oder bei deren Reinigung, wie etwa in Waschstraßen oder auch durch Zusätze von Scheibenreinigungsflüssigkeiten, bedingt sein kann.

Bevorzugt wird deshalb für die vorstehend in Mol-% angegebene Zusammensetzung bei einer ersten Gruppe von Borosilicatgläsern, dass $c_{B2O3,trigonal}$ mindestens 3 Mol-%, bevorzugt mindestens 5 Mol-%, besonders bevorzugt mindestens 7 Mol-%, noch weiter bevorzugt mindestens 9 Mol-%, aber maximal 11 Mol-%, bevorzugt maximal 10 Mol-% beträgt.

Damit gilt generell für die Zusammensetzung der Borosilicatgläser der ersten Gruppe in Mol-%:

$$B_2O_3 + Al_2O_3 - Na_2O - K_2O - Li_2O \geq 3 \text{ Mol-\% und}$$

$$B_2O_3 + Al_2O_3 - Na_2O - K_2O - Li_2O \leq 11 \text{ Mol-\%.}$$

Für bevorzugte Ausführungsformen gilt somit auch:

$$B_2O_3 + Al_2O_3 - Na_2O - K_2O - Li_2O \geq 5 \text{ Mol-\% und}$$

$$B_2O_3 + Al_2O_3 - Na_2O - K_2O - Li_2O \leq 10 \text{ Mol-\%.}$$

Für besonders bevorzugte Ausführungsformen der ersten Gruppe von Borosilicatgläsern gilt somit auch:

$$B_2O_3 + Al_2O_3 - Na_2O - K_2O - Li_2O \geq 7 \text{ Mol-\% und}$$

$$B_2O_3 + Al_2O_3 - Na_2O - K_2O - Li_2O \leq 9 \text{ Mol-\%.}$$

Für ganz besonders bevorzugte Ausführungsformen der ersten Gruppe von Borosilicatgläsern gilt somit auch:

$$B_2O_3 + Al_2O_3 - Na_2O - K_2O - Li_2O \geq 9 \text{ Mol-\% und}$$

$$B_2O_3 + Al_2O_3 - Na_2O - K_2O - Li_2O \leq 10 \text{ Mol-\%.}$$

Für eine zweite Gruppe von Borosilicatgläsern, welche insbesondere eine höhere Laugenbeständigkeit aufweisen, gilt, dass $c_{B2O3,trigonal}$ mindestens 2 Mol-%, bevorzugt mindestens 4 Mol-%, und besonders bevorzugt mindestens 6 Mol-%, aber maximal 10 Mol-%, bevorzugt maximal 8 Mol-% beträgt.

Damit gilt generell für die zweite Gruppe von Borosilicatgläsern:

$$B_2O_3 + Al_2O_3 - Na_2O - K_2O - Li_2O \geq 2 \text{ Mol-\% und}$$

$$B_2O_3 + Al_2O_3 - Na_2O - K_2O - Li_2O \leq 10 \text{ Mol-\%.}$$

Für bevorzugte Ausführungsformen der zweiten Gruppe von Borosilicatgläsern gilt somit auch:

$$B_2O_3 + Al_2O_3 - Na_2O - K_2O - Li_2O \geq 4 \text{ Mol-\% und}$$

$B_2O_3 + Al_2O_3 - Na_2O - K_2O - Li_2O \leq 8$ Mol-%.

Für besonders bevorzugte Ausführungsformen der zweiten Gruppe von Borosilicatgläsern gilt somit auch:

$B_2O_3 + Al_2O_3 - Na_2O - K_2O - Li_2O \geq 6$ Mol-% und

$B_2O_3 + Al_2O_3 - Na_2O - K_2O - Li_2O \leq 8$ Mol-%.

Nochmals weitere Ausführungsformen der Borosilicatglasscheibe können auch ein Borosilicatglas umfassen oder aus diesem bestehen, welches eine Zusammensetzung mit den folgenden Komponenten (in Gew.-%) aufweist:

| | |
|---|---|
| $SiO_2$ | 78,3-81,0 |
| $B_2O_3$ | 9,0-13,0 |
| $Al_2O_3$ | 3,5-5,3 |
| $Na_2O$ | 3,5-6,5 |
| $K_2O$ | 0,0-2,0, bevorzugt 0,3-2,0 |
| CaO | 0,0-2,0. |

Auch diese vorstehende Zusammensetzung wird in den vorliegend offenbarten Ausführungsformen bevorzugt in Kombination mit einer Zusatzbedingung verwendet. Da diese Zusatzbedingung vorteilhafter in Molprozenten formuliert werden kann, wird zunächst die vorstehend offenbarte Zusammensetzung des Borosilicatglases in Mol-% umgerechnet angegeben.

Angegeben werden für jedes Oxid die eindeutig definierte untere bzw. obere Grenze des Molprozent-Zusammensetzungsbereiches, welche jeweils auch dem Konzentrationsbereich dieses Oxids im Mol-% entspricht, für den sich eine mit allen o.a. Gewichtsprozent-Zusammensetzungsbereichen entsprechende Molprozent-Zusammensetzung wie folgt beschreiben lässt:

| | |
|---|---|
| $SiO_2$ | 80,7-84,3 |
| $B_2O_3$ | 8,0-11,6 |
| $Al_2O_3$ | 2,2-3,2 |
| $Na_2O$ | 3,5-6,5 |
| $K_2O$ | 0,2-1,3 |
| CaO | 0,0-2,2. |

Die Zusatzbedingung lautet hier :

$$C_{B2O3,trigonal} = C_{B2O3} + C_{Al2O3} - C_{Na2O} - C_{K2O} - C_{CaO}$$

Bevorzugt wird deshalb auch für die vorstehend in Mol-% angegebene Zusammensetzung bei einer ersten Gruppe von Borosilicatgläsern, dass $C_{B2O3,trigonal}$ mindestens 3 Mol-%, besonders bevorzugt mindestens 5 Mol-%, besonders bevorzugt mindestens 7 Mol-%, noch weiter bevorzugt mindestens 9 Mol-%, aber maximal 11 Mol-%, bevorzugt maximal 10 Mol-% beträgt.

Damit gilt generell für die Zusammensetzung der Borosilicatgläser der ersten Gruppe in Mol-%:

$B_2O_3 + Al_2O_3 - Na_2O - K_2O - CaO \geq 3$ Mol-% und

$B_2O_3 + Al_2O_3 - Na_2O - K_2O - CaO \leq 11$ Mol-%.

Für bevorzugte Ausführungsformen der Borosilicatgläser der ersten Gruppe gilt somit auch:

$B_2O_3 + Al_2O_3 - Na_2O - K_2O - CaO \geq 5$ Mol-% und

$B_2O_3 + Al_2O_3 - Na_2O - K_2O - CaO \leq 10$ Mol-%.

Für besonders bevorzugte Ausführungsformen der ersten Gruppe von Borosilicatgläsern gilt somit auch:

$B_2O_3 + Al_2O_3 - Na_2O - K_2O - CaO \geq 7$ Mol-% und

$B_2O_3 + Al_2O_3 - Na_2O - K_2O - CaO \leq 9$ Mol-%.

Für ganz besonders bevorzugte Ausführungsformen der ersten Gruppe von Borosilicatgläsern gilt somit auch:

$B_2O_3 + Al_2O_3 - Na_2O - K_2O - CaO \geq 9$ Mol-% und

$B_2O_3 + Al_2O_3 - Na_2O - K_2O - CaO \leq 10$ Mol-%.

Für eine zweite Gruppe von Borosilicatgläsern, welche insbesondere eine höhere Laugenbeständigkeit aufweisen, gilt, dass $c_{B2O3,trigonal}$ mindestens 2 Mol-%, bevorzugt mindestens 4 Mol-%, und besonders bevorzugt mindestens 6 Mol-%, aber maximal 10 Mol-%, bevorzugt maximal 8 Mol-% beträgt.
Damit gilt generell für die zweite Gruppe von Borosilicatgläsern:

$B_2O_3 + Al_2O_3 - Na_2O - K_2O - CaO \geq 2$ Mol-% und

$B_2O_3 + Al_2O_3 - Na_2O - K_2O - CaO \leq 10$ Mol-%.

Für bevorzugte Ausführungsformen der zweiten Gruppe von Borosilicatgläsern gilt somit auch:

$B_2O_3 + Al_2O_3 - Na_2O - K_2O - CaO \geq 4$ Mol-% und

$B_2O_3 + Al_2O_3 - Na_2O - K_2O - CaO \leq 8$ Mol-%.

Für besonders bevorzugte Ausführungsformen der zweiten Gruppe von Borosilicatgläsern gilt somit auch:

$B_2O_3 + Al_2O_3 - Na_2O - K_2O - CaO \geq 6$ Mol-% und

$B_2O_3 + Al_2O_3 - Na_2O - K_2O - CaO \leq 8$ Mol-%.

Im Rahmen der vorliegenden Offenbarung wird auch ein Verbund angegeben, welcher wenigstens eine gefloatete Borosilicatglasscheibe, wie diese vorstehend beschrieben wurde, mit einer Dicke zwischen 1,1 mm und 5,4 mm, wenigstens eine weitere Glasscheibe und wenigstens eine Kunststoffzwischenschicht umfasst.
Die weitere Glasscheibe kann beispielsweise ein vorliegend offenbartes Borosilicatglas oder auch ein Kalk-Natron-Glas umfassen oder aus diesem bestehen.
Bei diesem Verbund kann zwischen der Borosilicatglasscheibe und der weiteren Glasscheibe, insbesondere in oder in der Nähe der Kunststoffzwischenschicht ein Sensor, insbesondere ein optischer Sensor zwischen der Borosilicatglasscheibe und der weiteren Scheibe angeordnet sein.
Bei weiteren Ausführungsformen, welche beispielsweise für die Nachrüstung herkömmlicher Fahrzeugscheiben vorgesehen sein können, kann die Borosilicatglasscheibe zumindest vor einem flächigen Bereich, welchem ein Sensor, insbesondere ein optischer Sensor, vorzugsweise ein bildgebender optischer Sensor, zugeordnet ist, angeordnet sein.
Besonders vorteilhaft ist eine derartige Anordnung, wenn die Fahrzeugscheibe oder die erste Scheibe eines Verbundes kein Borosilicatglas, sondern beispielsweise ein Kalk-Natron-Glas umfasst oder aus diesem besteht. In diesem Fall können die mit vorliegender Offenbarung beschriebenen Vorteile auch auf herkömmliche Fahrzeugscheiben übertragen werden.
Hierbei kann es in vielen Fällen bereits genügen, wenn die Borosilicatglasscheibe nur vor dem flächigen Bereich, welcher einem Sensor, insbesondere einem optischen Sensor zugeordnet ist, angeordnet ist. Wenn diese vor den jeweiligen Sensoren angeordnete Borosilicatglasscheibe ausgewechselt wird, muss damit nicht auch die gesamte Fahrzeugscheibe ausgewechselt werden und können erhebliche Kosteneinsparungen realisiert werden. Gerade im gewerblichen Bereich können diese Kosteneinsparungen eine bedeutende Rolle spielen.
Bei diesen Ausführungsformen kann eine Kunststoffzwischenschicht, welche zwischen der Borosilicatglasscheibe und der kein Borosilicatglas, sondern insbesondere ein Kalk-Natron-Glas als erste Scheibe umfassenden Kraftfahrzeugscheibe angeordnet ist, auch vorteilhaft getönt sein, beispielsweise um Wärmeeinstrahlung in das Innere des Kraftfahrzeugs zu vermindern.
Aufgrund der vorliegend offenbarten Vorteile kann die Kraftfahrzeugscheibe insbesondere eine Frontscheibe sein, welche regelmäßig einer höheren partikulären Belastung ausgesetzt ist als beispielsweise im Fahrzeugdach angeordnete Panoramascheiben oder auch Seiten- sowie Rückscheiben.

Die Erfindung wird nachfolgend anhand von Ausführungsformen unter Bezugnahme auf die beiliegenden Zeichnungen detaillierter beschrieben.

Es zeigen:

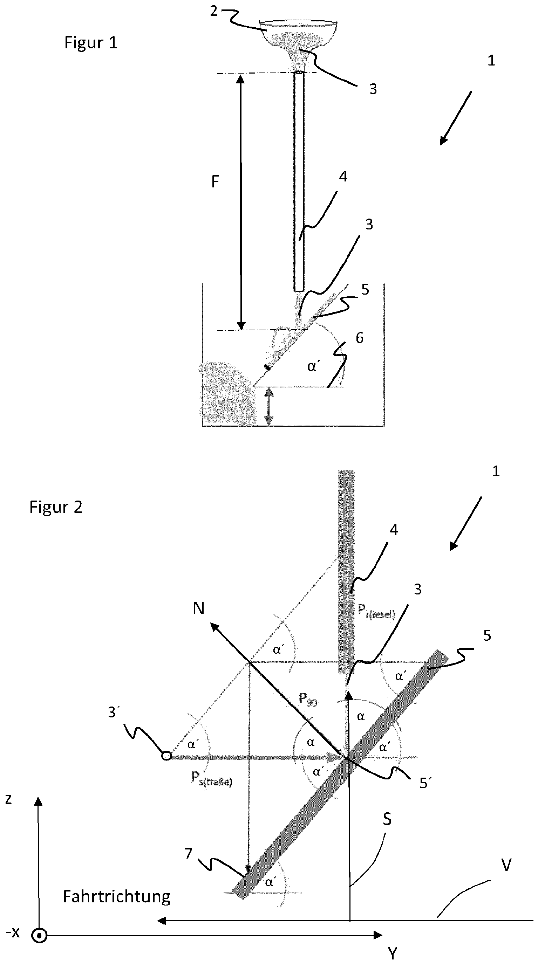

Figur 1     eine stark schematisierte Darstellung einer Anordnung zur Durchführung eines Splittrieseltests in einer Ansicht von vorn,

Figur 2     eine nochmals stärker schematisierte Darstellung einer Anordnung zur Durchführung eines Splittrieseltests in einer Aufsicht von vorn, bei welcher zusätzlich Impulse von Partikeln dargestellt sind, wie diese bei typischen Fahrsituationen von Kraftfahrzeugen auftreten,

Figur 3     eine vertikal verlaufende Schnittansicht einer Kraftfahrzeugscheibe mit einer Borosilicatglasscheibe einer ersten Ausführungsform, bei welcher die Kraftfahrzeugscheibe in einem Kraftfahrzeug in deren normaler Einbaulage gezeigt ist,

Figur 4     eine horizontal verlaufende Schnittansicht einer Kraftfahrzeugscheibe mit einer Borosilicatglasscheibe einer weiteren Ausführungsform,

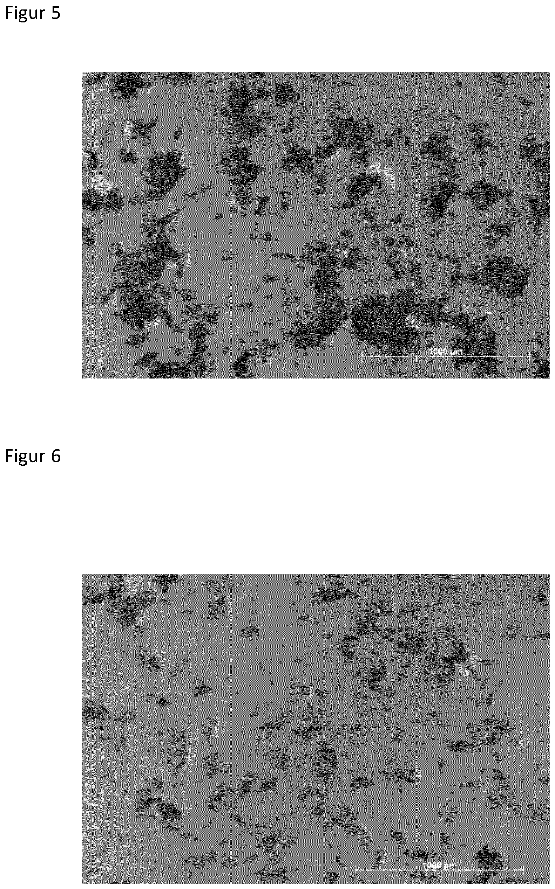

Figur 5     eine mikroskopische Aufnahme der Oberfläche einer aus Kalk-Natron-Glas bestehenden Scheibe, welche einem Splittrieseltest unterzogen wurde, bei welchem diese Oberfläche der Einwirkung der Splittteilchen ausgesetzt war,

Figur 6     eine mikroskopische Aufnahme der Oberfläche einer Borosilicatglasscheibe, welche einem Splittrieseltest unterzogen wurde, bei welchem diese Oberfläche der Einwirkung der Splittteilchen ausgesetzt war,

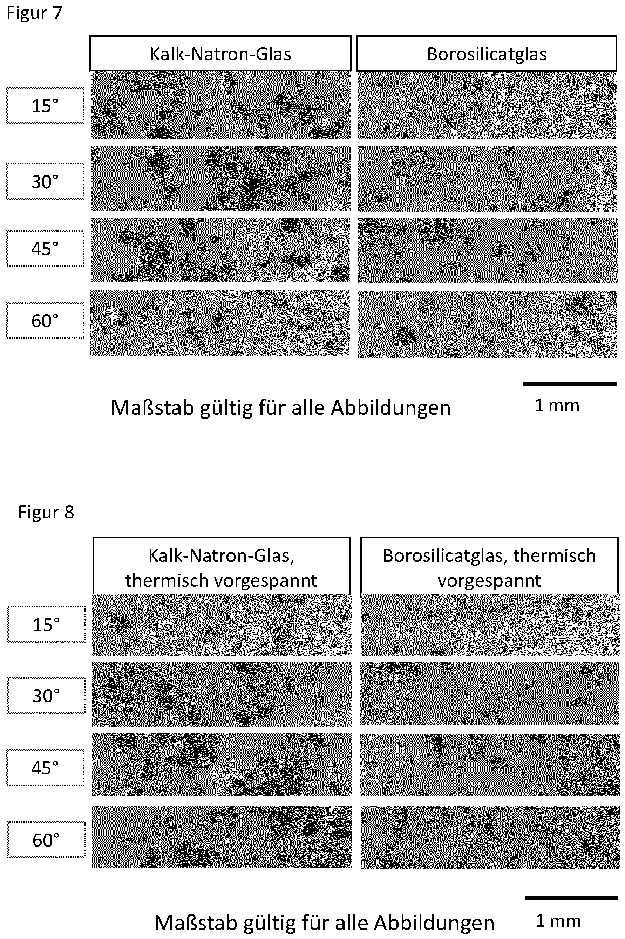

Figur 7     mikroskopische Aufnahmen jeweils der Oberflächen einer aus Kalk-Natron-Glas bestehenden Scheibe sowie einer Borosilicatglasscheibe, welche einem Splittrieseltest unterzogen wurde, bei welchem diese Oberfläche der Einwirkung der Splittteilchen ausgesetzt war, für verschiedene Winkel $\alpha'$, mit welchen die Splittteilchen auf die jeweilige Scheibe auftrafen, bei welchen weder jeweils die aus Kalk-Natron-Glas bestehenden Scheibe noch die Borosilicatglasscheibe vorgespannt war,

Figur 8     mikroskopische Aufnahmen jeweils der Oberflächen einer aus Kalk-Natron-Glas bestehenden Scheibe sowie einer Borosilicatglasscheibe, welche einem Splittrieseltest unterzogen wurde, bei welchem diese Oberfläche der Einwirkung der Splittteilchen ausgesetzt war, für verschiedene Winkel $\alpha'$, mit welchen die Splittteilchen auf die jeweilige Scheibe auftrafen, bei welchen die aus Kalk-Natron-Glas bestehenden Scheibe und die Borosilicatglasscheibe thermisch vorgespannt war,

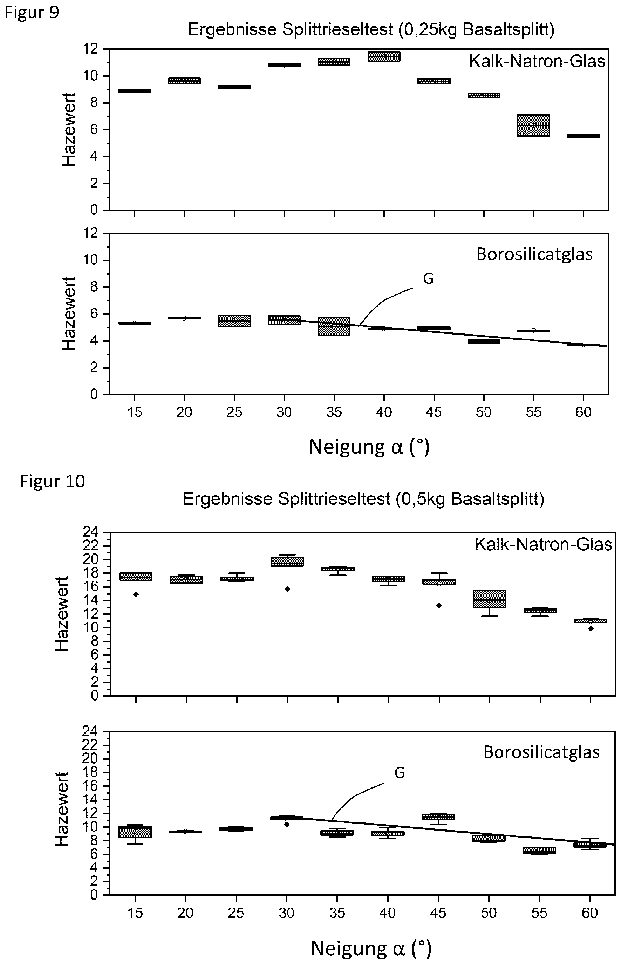

Figur 9     Haze-Werte als Ergebnis von Streulichtmessungen, wie diese als Funktion der Neigung $\alpha'$ nach Durchführung des Splittrieseltests bei einer nicht vorgespannten, aus Kalk-Natron-Glas bestehenden Scheibe und einer nicht vorgespannten Borosilicatglasscheibe erhalten werden, für eine Gesamtmenge einwirkender Splittteilchen von 0,25 kg Basaltsplitt,

Figur 10     Haze-Werte als Ergebnis von Streulichtmessungen, wie diese als Funktion der Neigung $\alpha'$ nach Durchführung des Splittrieseltests bei einer nicht vorgespannten, aus Kalk-Natron-Glas bestehenden Scheibe und einer nicht vorgespannten Borosilicatglasscheibe erhalten werden, für eine Gesamtmenge einwirkender Splittteilchen von 0,5 kg Basaltsplitt,

Figur 11     Haze-Werte als Ergebnis von Streulichtmessungen, wie diese als Funktion der Neigung $\alpha'$ nach Durchführung des Splittrieseltests bei einer thermisch vorgespannten, aus Kalk-Natron-Glas bestehenden Scheibe und einer thermisch vorgespannten Borosilicatglasscheibe erhalten werden, für eine Gesamtmenge einwirkender Splittteilchen von 0,5 kg Basaltsplitt,

Figur 12     eine vertikal verlaufende Schnittansicht einer Kraftfahrzeugscheibe mit einer Borosilicatglasscheibe einer weiteren Ausführungsform, bei welcher die Winkel $\beta 1$ und $\beta 2$ von auf die Fahrzeugscheibe auftreffenden Partikeln dargestellt sind,

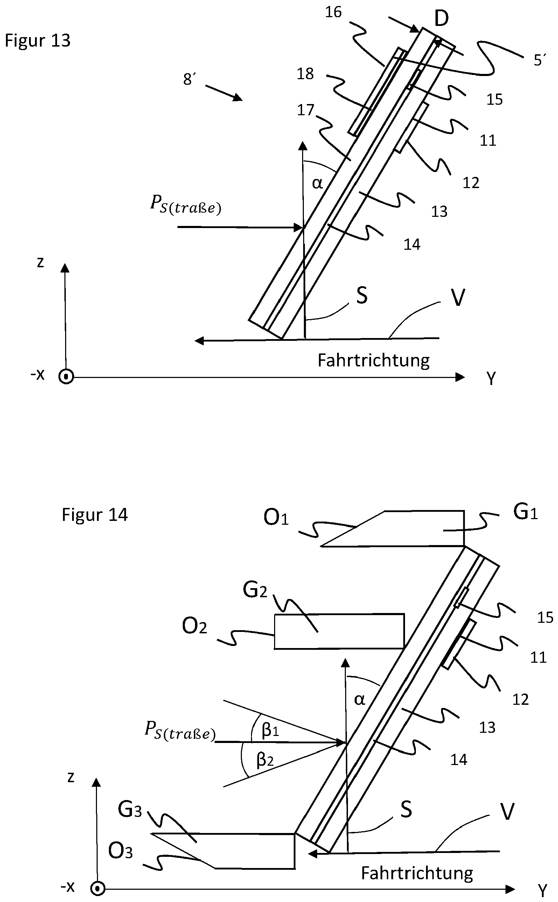

Figur 13     eine vertikal verlaufende Schnittansicht einer weiteren Kraftfahrzeugscheibe mit einer Borosilicatglasscheibe einer weiteren Ausführungsform, bei welcher die Borosilicatglasscheibe nur einen Teil einer kein Borosilicatglas umfassenden Kraftfahrzeugscheibe zum Schutz von Sensoren, insbesondere optischen Sensoren überdeckt

Figur 14     die Darstellung der Figur 12, bei welcher zusätzlich eine Einrichtung zur Ermittlung einer Umgebung, insbesondere einer rauen betrieblichen Umgebung, bei der mehr als 50 % der Partikel aus einem höher als die Borosilicatglasscheibe liegenden Bereich stammen oder bei der mehr als 50 % der Partikel aus einem tiefer als die Borosilicatglasscheibe liegenden Bereich stammen.

<u>Detaillierte Beschreibung bevorzugter Ausführungsformen</u>

Bei der nachfolgenden detaillierten Beschreibung bevorzugter Ausführungsformen bezeichnen gleiche Bezugszeichen jeweils gleiche oder gleichwirkende Bestandteile. Zum besseren Verständnis und um der Klarheit Willen sind die Figuren nicht maßstabsgerecht dargestellt.

Nachfolgend wird auf Figur 1 Bezug genommen, in welcher eine stark schematisierte Darstellung einer Anordnung 1 zur Durchführung eines Splittrieseltests in einer Aufsicht von vorn gezeigt ist. In einem nach unten geöffneten Behälter 2 befanden sich Splittteilchen 3, welche aus dem Behälter 2 in ein Freifallrohr 4 eintreten und dieses nach einer Freifallstrecke F in Richtung auf eine Scheibe 5 verlassen konnten, auf welche die Splittteilchen 3 mit jeweils einem definierten Teilchenimpuls $P_{r(iesel)}$ auftrafen, der durch die jeweilige Teilchenmasse und die entlang der Freifallstrecke F gewonnene Geschwindigkeit $V_{max}$ definiert war.

Zur Vermeidung von Anhaftungen, wurden die Teilchen 3 jeweils vor der Durchführung des Splittrieseltests getrocknet, sodass sichergestellt war, dass jeweils nur ein einziges Teilchen 3 unabhängig von jeweils anderen Teilchen und nicht zusammenhängende Teilchenagglomerate auf die Scheibe 5 auftrafen.

Die Scheibe 5 konnte jeweils unter einem verschiedenen Neigungswinkel $\alpha'$ angeordnet werden, wobei dieser Neigungswinkel $\alpha'$ jeweils der Winkel zu einer waagerechten Ebene 6 war, zu welcher sich die Splittteilchen 3 senkrecht verlaufend bewegt haben, bis diese jeweils auf die Scheibe 5 aufgetroffen sind.

Der vorstehend beschriebene Splittrieseltest wurde jeweils so lange für einen definierten und in den Figuren entsprechend angegebenen Neigungswinkel $\alpha'$ durchgeführt, bis die jeweils angegebene Gesamtmenge an Splittteilchen 3 auf die Scheibe 5 aufgetroffen war.

Für jeden Neigungswinkel $\alpha'$ wurde für den jeweiligen Splittrieseltest eine neue Scheibe 5 verwendet, deren Oberflächen frei von Beschädigungen waren.

Nach Durchführung des Splittrieseltests wurde die Scheibe 5 jeweils für jeden dieser Winkel mikroskopisch und mittels einer Streulichtmessung untersucht.

Die Freifallhöhe F entsprach 1,65 m, und es ergab sich hiermit die Teilchengeschwindigkeit $v_{max}$ beim Auftreffen auf die Scheibe 5 zu etwa 5, 689 m/s, mit $v_{max} = \sqrt{(2gh)}$. Die mittlere Teilchenmasse der Splittteilchen betrug 0,1 g also 0,0001 kg. Der Impuls der Teilchen beim Auftreffen Pr(proPartikel) betrug m·v = 0,000568973Ns dieser Impuls ist in Figur 2 auch als $P_{r(iesel)}$ dargestellt. Ein gesamter Impuls aller Teilchen bei einer gesamten Masse der Teilchen von 0,25 kg betrug etwa 1,422431896Ns. Ein gesamter Impuls aller Teilchen bei einer gesamten Masse der Teilchen von 0,5 kg ergab sich zu etwa 2,844863793Ns. Die Teilchen bestanden jeweils aus partikulärem Basaltsplitt.

Diese Messung des Haze erfolgte jeweils gemäß ASTM D1003 (CIE C) mit einem entsprechend geeichten Haze-Messgerät, vorliegend dem Gerät Haze-Gard plus AT-4725, der Firma BYK-Gardner.

Die nachfolgende Tabelle 1 zeigt die bei einem Splittrieseltest mit den vorstehend angegebenen Werten erhaltenden Werte für das gemessene Streulicht, somit des Haze. Die mit Haze KN bezeichneten Werte geben die für Kalk-Natron-Glas gemessenen Haze-Werte und die mit Haze BS bezeichneten die für Borosilicatglas gemessenen Werte an.

Sowohl die Scheibe 5 aus Kalk-Natron-Glas als auch die Scheibe 5 aus Borosilicatglas waren nicht vorgespannt und es wurde jeweils für jeden nachfolgend angegebenen Neigungswinkel $\alpha'$ eine Menge von 0,25 kg Basaltsplitt verwendet.

Tabelle 1

Haze-Werte für Kalk-Natron-Glas (KN) und Borosilicatglas (BS)

| $\alpha'$ (°) | Haze KN (%) | Haze BS (%) |
|---|---|---|
| 15 | 8,9 | 5,3 |
| 20 | 9,6 | 5,7 |
| 25 | 9,2 | 5,5 |
| 30 | 10,8 | 5,5 |
| 35 | 11,1 | 5,1 |
| 40 | 11,5 | 4,9 |
| 45 | 9,6 | 5,0 |
| 50 | 8,6 | 4,0 |
| 55 | 6,3 | 4,8 |
| 60 | 5,5 | 3,7 |

Die Wahrscheinlichkeit für Doppel-/Mehrfachtreffer (Multiple Impact) ist bei den Glasarten gleich, da bei der Durchführung des Splittrieseltests jeweils die gleiche Splittmenge unter jeweils gleichen Bedingungen verwendet wurde.

Bei Borosilicatglas, welches weniger spröde als Kalk-Natron-Glas ist, entstehen tendenziell bei einem einzelnen Aufprall einzelne kleine Vertiefungen (Pünktchen) in der Glasoberfläche, jedoch in der Regel keine Ausmuschelungen. Bei erneutem Aufprall an dieser Stelle wird dieser Krater in der Regel lediglich vertieft. Bei Borosilicatglas tritt im Gegensatz zu Kalk-Natron-Glas eine stärkere plastische Verformung ein, welche mit weniger Haze-wirksamen Brüchen einhergeht.

Kalk-Natron-Glas ist spröder als Borosilicatglas, sodass hier Mehrfachtreffer zu Ausmuschelungen oder zu Chipping führen. Diese Ausmuschelungen oder aufliegenden Chips führen durch die entstehende ausgebrochene Oberflächenstruktur (Bruchspiegel) und dabei zumindest teilweise auftretenden mehrfachen optischen Übergängen (Luft-Glas) zu einem erhöhten Haze-Wert. Hierbei kommt es zu einer Streulichtverstärkung durch jeweilige Bruchspiegel.

Die Brechzahl von Kalk-Natron-Glas ist zudem höher als die des vorliegend verwendeten Borosilicatglases, sodass ein gleich großer Defekt bei Kalk-Natron-Glas zu einem größeren Streueffekt und somit höherer Haze-Werten führt. Der Brechungsindex von Kalk-Natron-Glas ist größer als 1,5 wohingegen der Brechungsindex des vorliegend verwendeten Borosilicatglases etwa 1,47 betrug.

Figur 5 zeigt eine lichtmikroskopische Aufnahme der Oberfläche einer aus Kalk-Natron-Glas bestehenden Scheibe und Figur 6 einer Borosilicatglasscheibe. Es ist klar zu erkennen, dass die geschädigten Flächen bei Kalk-Natron-Glas unter gleichen Prüfungsbedingungen jeweils sehr viel größer als bei Borosilicatglas waren, welches in guter Übereinstimmung mit den Ergebnissen der Streulichtmessung, somit des Haze steht.

Die im Wesentlichen gleichen Ergebnisse zeigten sich auch für sämtliche gemessenen Werte des Neigungswinkels $\alpha$' wie diese in den Figuren 7 und 8 gezeigt sind.

Anhand der Figur 2 wird nachfolgend erläutert, wie sich die Ergebnisse des Splittrieseltests auf Fahrsituationen übertragen lassen, wie diese Kraftfahrzeugen bei deren alltäglichem Betrieb regelmäßig begegnen.

Figur 2 zeigt eine nochmals stärker schematisierte Darstellung einer Anordnung 1 zur Durchführung eines Splittrieseltests in einer Aufsicht von vorn, bei welcher zusätzlich Impulse $P_{S(traße)}$ von Partikeln dargestellt sind, wie diese bei typischen Fahrsituationen von Kraftfahrzeugen auftreten, und auf die Scheibe 5 auftreffen.

Legt man zunächst eine Hauptbewegungsrichtung V eines Fahrzeugs fest, kann relativ zu dieser eine Einbaulage einer Scheibe in oder an diesem Fahrzeug angegeben werden. Beispielhaft ist in der Schnittdarstellung der Figur 3 ein Teil eines Kraftfahrzeug 7 gezeigt, von welchem lediglich die Verbundglasscheibe 8 mit deren diese haltenden Karosserieabschnitten 9, 10 dargestellt ist.

Wenn diese Hauptbewegungsrichtung V in der waagerechten Ebene 6, zu welcher sich die Splittteilchen 3 beim Splittrieseltest senkrecht verlaufend bewegen, bis diese jeweils auf die Scheibe 5 auftreffen, verläuft, können die beim Splittrieseltest erhaltenen Ergebnisse auf die Einbaulage der Scheibe im Kraftfahrzeug wie nachfolgend, insbesondere für deren jeweilige Neigungswinkel $\alpha$, $\alpha$' beschrieben übertragen werden.

Hierbei wird angenommen, dass die Teilchen 3', welche auf eine Scheibe 5 eines Fahrzeugs, insbesondere Kraftfahrzeugs, in realen, regelmäßigen Fahrsituationen treffen, sich hierbei entgegen der Hauptbewegungsrichtung V bewegen und einen Impuls $P_{S(traße)}$ beim Auftreffen auf die Scheibe 5 aufweisen.

Zur Übertragung der Ergebnisse des Splittrieseltests auf reale, regelmäßige Fahrsituationen wurden in der Darstellung der Figur 2 die Richtungen der Impulse $P_{r(iesel)}$ und $P_{S(traße)}$ zusammen mit der Richtung einer jeweiligen Normalen N der Oberfläche 5' der Scheibe 5 im Auftreffpunkt der Teilchen 3, 3' in einer gemeinsamen Ebene liegend dargestellt, um seitliche Winkelabweichungen bei der Übertragung zu vermeiden.

Beispielhaft wird die Hauptbewegungsrichtung V des Fahrzeugs, insbesondere Kraftfahrzeugs 7 durch dessen Bewegung parallel zu einer unter dem Fahrzeug befindlichen Ebene, hier der waagerechten Ebene 6 definiert, welche parallel zu der, wie aus Figur 2 zu erkennen, durch die Richtungen X und Y des kartesischen Koordinatensystems aufgespannten Ebene liegt.

Da jedoch die Richtungen der Impulse $P_{r(iesel)}$ und $P_{S(traße)}$ senkrecht zueinander verlaufen, muss, um die Ergebnisse des Splittrieseltests auf reale, regelmäßige Fahrsituationen zu übertragen, auch der beim Splittrieseltest verwendete Neigungswinkel $\alpha$' nun an die Richtung der auf die Scheibe 5 treffenden Teilchen 3 entsprechend angepasst werden.

Hierzu wurden nun in Figur 2 diese übertragenen Neigungswinkel $\alpha$ eingezeichnet, bei welcher die Neigung $\alpha$ zumindest dieses flächigen Bereichs 11 gegenüber einer senkrecht zu einer Hauptbewegungsrichtung V des Fahrzeugs aufwärts verlaufenden Richtung S dargestellt sind.

Mit dieser Anordnung lassen sich die Ergebnisse des Splittrieseltests auf regelmäßige Fahrsituationen übertragen und die für den Winkel $\alpha$' ermittelten Werte für die Werte des Winkels $\alpha$ verwenden.

In äußerst überraschender Weise hat sich gezeigt, dass sich die Ergebnisse, welche mit den im Splittrieseltest verwendeten Splittteilchen erhalten wurden, auch auf reale, regelmäßige Fahrsituationen übertragen lassen, obwohl bei diesen realen, regelmäßigen Fahrsituationen

    a) das jeweilige Gewicht der auf die Scheibe 5 auftreffenden Teilchen,
    b) die jeweilige Geschwindigkeit der auf die Scheibe 5 auftreffenden Teilchen,
    c) die Form der auf die Scheibe 5 auftreffenden Teilchen sowie
    d) das Material der auf die Scheibe 5 auftreffenden Teilchen

nicht mit den im Splittrieseltest verwendeten Teilchen übereinstimmen muss.

Wegen der dennoch durch die Erfinder erkannten Übertragbarkeit dieser Ergebnisse können vorteilhafte bauliche Angaben, insbesondere zu der Anordnung eines flächigen Bereichs für einen diesem flächigen Bereich zugeordneten Sensor, insbesondere optischen Sensor, vorzugsweise bildgebenden optischen Sensor, mit den erfindungsgemäßen Vorteilen gemacht werden.

Insbesondere werden deshalb im Rahmen der vorliegenden Offenbarung Partikel auch als diejenigen Teilchen verstanden, welche bei dem nachfolgenden Splittrieseltest verwendet werden und wie diese auch regelmäßig auch in alltäglichen Fahrsituationen auftreten.

Hierzu sollen jedoch zunächst die Ergebnisse des Splittrieseltests nochmals genauer betrachtet werden.

Es ist bei den Ergebnissen der Streulichtmessungen der Figuren 9, 10 und 11 in Übereinstimmung mit Tabelle 1 an deren Haze-Werten klar zu erkennen, dass die Haze-Werte für Kalk-Natron-Glasscheiben durchgehend, insbesondere für alle gemessenen Neigungswinkel höher sind als die Werte von Borosilicatglasscheiben, unabhängig davon, ob jeweils eine thermische Vorspannung vorlag oder nicht.

Darüber hinaus ist an den Werten des Haze auch zu erkennen, dass diese sich in Abhängigkeit vom jeweiligen Neigungswinkel $\alpha$ ändern.

In den Figuren 8, 9 und 10 wurde bei den Haze-Werten für Borosilicatglas jeweils eine Hilfsgerade G eingezeichnet, welche erkennen lässt, dass sich ab Neigungswinkeln $\alpha$ von etwa 30° eine stetige Abnahme der Haze-Werte für größer werdende Neigungswinkel $\alpha$ ergibt.

Besonders vorteilhafte Werte ergeben sich somit stabil für Neigungswinkel $\alpha$ oder somit eine Neigung $\alpha$, welche größer ist als 35°, welche beispielsweise, wie in Figur 2 dargestellt gegenüber einer senkrecht zu einer Hauptbewegungsrichtung V des Fahrzeugs aufwärts verlaufenden Richtung S, insbesondere vertikal aufwärts zu einer Hauptbewegungsrichtung (V) des Fahrzeugs verlaufenden Richtung, angegeben werden kann. Eine Scheibe mit derartigen Neigungswinkeln oder einer derartigen Neigung $\alpha$, wie diese beispielsweise in Figur 2 dargestellt ist, wird eine entsprechend geringere Streulichtanfälligkeit aufweisen, wenn diese einer partikulären Einwirkung in realen, regelmäßigen Fahrsituationen ausgesetzt ist.

Aufgrund baulicher Gegebenheiten, insbesondere bei Verwendung optischer Sensoren, insbesondere bildgebender optischer Sensoren, hat sich eine maximale Neigung $\alpha$ von etwa 65° ebenfalls als vorteilhaft erwiesen, denn dann können Verzerrungen und ein planparalleler Bildversatz im optischen Strahlengang gering gehalten werden.

Diese Aussagen gelten insbesondere für einen flächigen Bereich 11 der vorliegend offenbarten Borosilicatglasscheiben, welcher einem optischen Sensor 12, insbesondere einem bildgebenden optischen Sensor 12, wie dieser lediglich schematisch in Figur 4 und Figur 12 dargestellt ist, zugeordnet ist.

Vorteilhaft liegt somit die Neigung $\alpha$ zumindest dieses flächigen Bereichs gegenüber einer senkrecht zu einer Hauptbewegungsrichtung V des Fahrzeugs aufwärts verlaufenden Richtung S, welche auch als vertikal verlaufende Neigung $\alpha$ bezeichnet werden kann, in einem Bereich zwischen 35° und 65°, bevorzugt zwischen 40° und 60°.

Als flächiger Bereich 11 kann somit jeder Bereich einer Fahrzeugscheibe 8, 8' einem Sensor zugeordnet werden oder als ein als einem Sensor zugeordneter Bereich 11 verwendet werden, welcher in diesem flächigen Bereich die vorstehende Bedingung für die vorliegend offenbarte vertikal verlaufende Neigung $\alpha$, $\alpha_1$ und $\alpha_2$ sowie für die nachfolgend angegebene horizontale Neigung Y erfüllt und über eine Fläche verfügt, welche den Eintritt von Licht in einem für den jeweiligen Sensor ausreichendem Maß ermöglicht. Bei einfachen, lediglich die Helligkeit erfassenden Sensoren, wie beispielsweise Leuchtdioden, kann dieser flächige Bereich eine Größe von lediglich 1 cm$^2$ aufweisen und bei komplexeren, beispielsweise bildgebenden Sensoren oder bei Regensensoren eine Fläche von bis zu etwa 25 cm$^2$, oder sogar eine größere Fläche aufweisen. Dieser flächige Bereich kann die Form eines Quadrats, Rechtecks, eines Mehrecks, eines Kreises, eines Ovals haben oder eine Freiform aufweisen.

Wie Figur 4 zu entnehmen ist, kann auch eine horizontal verlaufende Neigung Y betrachtet werden, welche durch den Normalenvektor N der Oberfläche 5' der Scheibe 5 zusammen mit der Hauptbewegungsrichtung V des Fahrzeugs definiert ist. Für diese derart definierte horizontale Neigung Y sollen die im Rahmen der vorliegenden Offenbarung zur vertikalen Neigung $\alpha$, $\alpha_1$ und $\alpha_2$ getroffenen Aussagen jeweils entsprechend gelten. Aufgrund der vereinfacht dargestellten geometrischen Verhältnisse gilt jedoch für den Betrag der horizontalen oder horizontal verlaufenden Neigung Y jeweils $Y = 90° - \alpha$ insbesondere auch für die jeweils offenbarten numerischen Werte von $\alpha$.

Bei der in Figur 12 dargestellten ebenen Scheibe, insbesondere ebenen Verbundglasscheibe 8 gilt dieser vertikale Neigungswinkel oder diese vertikale Neigung $\alpha$ für die gesamte Oberfläche, insbesondere auch der ersten Scheibe 5 der Verbundglasscheibe 8 mit deren Oberfläche 5'.

Für Fahrzeuge, insbesondere Fahrzeuge, welche einer erhöhten Partikelbelastung ausgesetzt sind, insbesondere für Fahrzeuge zur Verwendung in einer rauen betrieblichen Umgebung, bei der mehr als 50 % der Partikel aus einem höher als die Borosilicatglasscheibe liegenden Bereich stammen und im Mittel in einem Winkel von $\beta1$ gegenüber der Hauptbewegungsrichtung des Fahrzeugs wie in Figur 12 dargestellt auftreffen, kann die Neigung $\alpha$ zumindest des dem Sensor zugeordneten flächigen Bereichs 11 gegenüber einer senkrecht zu einer Hauptbewegungsrichtung V des Fahrzeugs aufwärts verlaufenden Richtung (S) in einem Bereich zwischen 35° + $\beta1$ und 65° liegen.

Die in dem vorstehend erwähnten Absatz beschriebene Ausführungsform ist nicht auf die Verwendung in rauen betrieblichen Umgebungen beschränkt, sondern kann vorteilhaft auch ohne jegliche Beschränkung von der Einsatzumgebung eines Kraftfahrzeugs Verwendung finden. Dabei werden dennoch die vorliegend beschriebenen Vorteile für Partikel, welche aus einem höher als die Borosilicatglasscheibe liegenden Bereich stammen, verwirklicht.

Wie ebenfalls in Figur 12 dargestellt ist, kann, wenn mehr als 50 % der Partikel aus einem tiefer als die Borosilicatglasscheibe liegenden Bereich stammen und im Mittel in einem Winkel von $\beta2$ gegenüber der Hauptbewegungsrichtung des Fahrzeugs auftreffen, die Neigung zumindest des dem Sensor zugeordneten flächigen Bereichs 11 gegenüber einer senkrecht zu einer Hauptbewegungsrichtung des Fahrzeugs aufwärts verlaufenden Richtung in einem Bereich zwischen 35° und 60° - $\beta2$ liegen.

Auch die in dem vorstehend erwähnten Absatz beschriebene Ausführungsform ist nicht auf die Verwendung in rauen betrieblichen Umgebungen beschränkt, sondern kann vorteilhaft auch ohne jegliche Beschränkung von der Einsatzumgebung eines Kraftfahrzeugs Verwendung finden. Dabei werden dennoch die vorliegend beschriebenen Vorteile für Partikel, welche aus einem tiefer als die Borosilicatglasscheibe liegenden Bereich stammen, verwirklicht.

Die Erfassung von Partikeln oder Teilchen, welche aus einem höher als die Borosilicatglasscheibe liegenden Bereich stammen, und von Partikeln oder Teilchen welche aus einem tiefer als die Borosilicatglasscheibe liegenden Bereich stammen, kann lediglich beispielhaft durch einen Fachmann dadurch vorgenommen werden, dass beispielsweise wie in Figur 14 dargestellt, in Fahrtrichtung V geöffnete und ansonsten geschlossene Messgefäße $G_1$, $G_2$, $G_3$ in einer jeweiligen Umgebung unter den typischen Bedingungen dieser Umgebung, wie beispielsweise den in dieser Umgebung gestatteten Fahrzeuggeschwindigkeiten, verwendet werden. Diese Gefäße $G_1$, $G_2$, $G_3$ können jeweils vor oder seitlich an der jeweiligen Fahrzeugscheibe, insbesondere Borosilicatglasscheibe befestigt sein und weisen in Fahrtrichtung jeweils den gleichen Öffnungsquerschnitt auf.

Das Gefäß $G_1$ erlaubt durch seine schräg nach oben verlaufende Öffnung $O_1$ den Zutritt von Partikeln aus einem höher als die Borosilicatglasscheibe liegenden Bereich. Das Gefäß $G_2$ erlaubt durch seine horizontal verlaufende Öffnung $O_2$ Zutritt von Partikeln aus einem vor der Borosilicatglasscheibe liegenden Bereich und das Gefäß $G_3$ erlaubt durch seine schräg nach unten verlaufende Öffnung $O_3$ den Zutritt von Partikeln aus einem tiefer als die Borosilicatglasscheibe liegenden Bereich.

Je länger sich die Gefäße $G_1$, $G_2$, $G_3$ in Fahrtrichtung erstrecken und je geringer die Neigung der Öffnung $O_1$ und $O_2$ relativ zur Fahrtrichtung V ist, umso genauer wird das jeweils erhaltene Messergebnis und je nach Genauigkeitsanforderung wird ein Fachmann diese Gefäße an seine jeweiligen Bedürfnisse anpassen.

Durch Wiegen der in der jeweiligen Umgebung aufgesammelten Menge $M_1$, $M_2$, $M_3$ der Teilchen in den Messgefäßen $G_1$, $G_2$, $G_3$ kann der Fachmann dann das in Anspruch 2 angegebene Verhältnis von Teilchen aus einem höher als die Borosilicatglasscheibe und von Teilchen aus einem tiefer als die Borosilicatglasscheibe liegenden Bereich beispielsweise durch Quotientenbildung von $M_1 / (M_1 + M_2 + M_3)$ für die aus dem höherliegenden Bereich stammenden Teilchen und von $M_3 / (M_1 + M_2 + M_3)$ für die aus dem tieferliegenden Bereich stammenden Teilchen ermitteln.

Zur Ermittlung der Winkel $\beta1$ und $\beta2$ von auf die Fahrzeugscheibe auftreffenden Partikeln kann das vorzugsweise vor dem dem Sensor zugeordneten flächigen Bereich angeordnete Gefäß $G_2$ jeweils um einen Winkel nach oben, somit in positiver Richtung des Winkels $\beta1$ verkippt werden, wobei hierbei diese Verkippwinkel zwischen 0° und 30°, beispielsweise in 5° Schritten variiert werden können, und kann das Gefäß $G_2$ um einen Winkel nach unten somit in positiver Richtung des Winkels $\beta2$ verkippt werden, wobei hierbei diese Verkippwinkel zwischen 0° und 25°, beispielsweise in 5° Schritten variiert werden können, sodass hierbei alle Winkel, überstrichen werden, welche für die vorliegenden Ausführungsformen von Interesse sind, und erfasst werden. Durch einfaches oder mehrfaches Durchfahren der jeweiligen Umgebung für jeden Verkippwinkel können für diese jeweils erfassten Winkel die beim Durchfahren der Umgebung dabei im Gefäß $G_2$ erhaltenen Massen $M_2$ den jeweiligen Verkippwinkeln zugeordnet mit der nötigen Genauigkeit erfasst werden und kann aus diesen den jeweiligen Winkeln zugeordneten Massen $M_2$ jeweils die Menge der Teilchen, welche aus diesen Winkeln stammen, ermittelt werden. Obwohl ein Winkelintervall von 5° als ausreichend angesehen wird, können auch kleiner Winkelintervalle durch einen Fachmann gewählt werden, falls dieser die Genauigkeit dieser Messung dennoch erhöhen will. Hierdurch können nicht nur die jeweils mit einer Neigung von $\beta1$ oder $\beta2$ gegenüber der Hauptbewegungsrichtung (V) des Fahrzeugs auftreffenden Teilchen, sondern kann auch deren Mittelwert für $\beta1$ und $\beta2$, beispielsweises durch lineare Mittelung ermittelt werden.

Die Scheibe 5 kann, insbesondere auch als erste Scheibe einer Verbundglasscheibe 8 mit Dicken D von 1,1mm bis 5,4mm ausgebildet sein.

Beispielsweise sind auch Dicken D, insbesondere für Lastkraftfahrzeuge von 3 mm bis 5 mm verwendbar.

Eine Borosilicatglasscheibe kann sowohl außenliegend als Scheibe 5 als auch innenliegend, wie in Figur 12 mit dem Bezugszeichen 13 angegeben, als weitere Scheibe 13 verwendet werden.

Zwischen der äußeren Scheibe 5 und der inneren Scheibe 13 der Verbundglasscheibe 8 ist eine Kunststoffzwischenschicht 14 angeordnet, mittels welcher die Scheiben 5, 13 mechanisch fest aneinander gehalten sind.

An der Borosilicatglasscheibe 5 und beispielsweise bei der Verbundglasscheibe 8 auch an der weiteren Scheibe 13 kann bei weiteren Ausführungsformen in oder in der Nähe der Kunststoffzwischenschicht 14 ebenfalls ein Sensor 15, insbesondere ein optischer Sensor 15 zwischen der Borosilicatglasscheibe und der weiteren Scheibe angeordnet sein. Als in der Nähe der Kunststoffzwischenschicht 14 liegend wird hierbei ein Sensor 15 verstanden, welcher in die Kunststoffzwischenschicht 14 zwar jeweils teilweise, insbesondere seitlich eingebettet ist, aber von dieser nicht allseitig umgeben ist, sondern statt an die Kunststoffzwischenschicht 14 bereichsweise auch an die Borosilicatglasscheibe 5 und/oder an die weitere Scheibe 13 angrenzt.

Nachfolgend wird auch Figur 13 Bezug genommen, welche eine vertikal verlaufende Schnittansicht einer weiteren Kraftfahrzeugscheibe, insbesondere Verbundglasscheibe 8' mit einer Borosilicatglasscheibe 16 einer weiteren Ausführungsform zeigt.

Bei dieser Ausführungsform überdeckt die Borosilicatglasscheibe 16 nur einen Teil einer insbesondere kein Borosilicatglas umfassenden Kraftfahrzeugscheibe 17 zum Schutz von Sensoren, insbesondere zum Schutz der optischen Sensoren 12, 15 und überdeckt somit zumindest den flächigen Bereich 11, welcher jeweils dem optischen Sensor zugeordnet ist.

Eine Kunststoffzwischenschicht 18, welche zwischen der Borosilicatglasscheibe 16 und der insbesondere kein Borosilicatglas als erste Scheibe umfassenden Kraftfahrzeugscheibe 17 angeordnet ist, kann getönt sein, und dabei insbesondere auch einen wärmeabsorbierende oder - reflektierende Tönung aufweisen.

Die Erfindung ist jedoch nicht nur auf ebene Scheiben beschränkt, sondern kann auch verwirklicht werden, wenn diese beispielsweise zumindest bereichsweise eine Krümmung aufweisen.

Bei derartigen, beispielsweise in den Figuren 3 und 4 dargestellten Ausführungsformen sollen sich dann innerhalb des einem Sensors zugeordneten flächigen Bereichs oder vor diesem Bereich liegende Tangenten $T_1$, $T_2$ der Oberfläche 5' der Borosilicatglasscheibe 5, gegenüber einer senkrecht zu einer Hauptbewegungsrichtung des Fahrzeugs aufwärts verlaufenden Richtung S, insbesondere vertikal aufwärts zu einer Hauptbewegungsrichtung (V) des Fahrzeugs verlaufenden Richtung, eine Neigung $\alpha_1$, $\alpha_2$ aufweisen, die in einem Bereich zwischen vorzugsweise 35° und 60° liegt und bevorzugt zwischen 40° und 60° liegt.

Hierbei ist, wie in Figur 3 gezeigt, jedoch der Ausdruck "innerhalb des einem Sensors zugeordneten flächigen Bereichs oder vor diesem Bereich liegende Tangenten $T_1$, $T_2$ der Oberfläche 5'" auf den Strahlengang 19, 20 von durch die Scheibe tretendem Licht bezogen, welches der Brechung an den jeweils geneigten Oberflächen der Scheibe 5 sowie der innenliegenden weitere Scheibe 13 der Verbundglasscheibe 8 unterliegt und hierdurch einen planparallelen Versatz erzeugt. Mit diesem Ausdruck soll sichergestellt sein, dass für sämtliches auf den flächigen Bereich 11 auftreffendes, somit innerhalb des Strahlengangs 19, 20 verlaufendes Licht die vorstehende Bedingung für die jeweilige Neigung $\alpha_1$, $\alpha_2$ erfüllt ist.

Bei derartigen Ausführungsformen kann es, insbesondere auch wegen des vorstehend angesprochenen planparallelen Versatzes vorteilhaft sein, wenn sich der dem Sensor 12 zugeordnete flächige Bereich 11 innerhalb des in Einbaulage definierten oberen Drittels, bevorzugt oberen Fünftels der Borosilicatglasscheibe 5 befindet, wobei in Sinne der vorliegenden Offenbarung oben oder aufwärts bezogen auf die Z-Richtung des in den Figuren gezeigten kartesischen Koordinatensystems verstanden wird und als das obere Drittel beziehungsweise das obere Fünftel das obere Drittel beziehungsweise obere Fünftel der Kraftfahrzeugscheibe bezogen auf die Z-Richtung verstanden wird.

Bei den vorstehend offenbarten Ausführungsformen kann generell ein optischer Sensor 12, vorzugsweise ein die Helligkeit erfassender, ein bildgebender Sensor oder ein Regensensor, an dem einem Sensor zugeordneten flächigen Bereich 11 angeordnet sein.

Bezugszeichenliste

1    Anordnung zur Durchführung eines Splittrieseltests
2    Behälter
3    Splittteilchen
4    Freifallrohr
5    Scheibe, welche dem Splittrieseltest unterzogen wird
5'    Oberfläche der Scheibe 5, welche einem partikulärem Auftreffen ausgesetzt ist,
6    waagerechte Ebene, zu welcher sich die Splittteilchen 3 beim Splittrieseltest senkrecht verlaufend bewegen, bis diese jeweils auf die Scheibe 5 auftreffen
7    Kraftfahrzeug
8    Verbundglasscheibe des Kraftfahrzeugs
8'    Verbundglasscheibe einer weiteren Ausführungsform
9    die Verbundglasscheibe 8 haltender Karosserieabschnitt des Kraftfahrzeugs 7
10    die Verbundglasscheibe 8 haltender Karosserieabschnitt des Kraftfahrzeugs 7
11    flächiger, jedoch nicht jeweils notwendig ebener Bereich der vorliegend offenbarten Borosilicatglasscheiben, welcher einem optischen Sensor 12, insbesondere einem bildgebenden optischen Sensor 12 zugeordnet ist

| | |
|---|---|
| 12 | optischer Sensor, insbesondere die Helligkeit erfassender optischer Sensor, bildgebender optischer Sensor oder Regensensor |
| 13 | innenliegende weitere Scheibe der Verbundglasscheibe 8 |
| 14 | Kunststoffzwischenschicht |
| 15 | Sensor, insbesondere optischer Sensor in der Kunststoffzwischenschicht 14 |
| 16 | Borosilicatglasscheibe einer weiteren Ausführungsform |
| 17 | insbesondere kein Borosilicatglas umfassende Kraftfahrzeugscheibe |
| 18 | Kunststoffzwischenschicht |
| 19 | Strahlengang von durch die Scheibe tretendem Licht |
| 20 | Strahlengang von durch die Scheibe tretendem Licht |

| | |
|---|---|
| F | Freifallhöhe |
| G | Hilfsgerade |
| $G_1$ | Messgefäß |
| G2 | Messgefäß |
| G3 | Messgefäß |
| $M_1$ | Menge der durch Messung erhaltenen Teilchen im Messgefäß $G_1$ |
| $M_2$ | Menge der durch Messung erhaltenen Teilchen im Messgefäß $G_2$ |
| $M_3$ | Menge der durch Messung erhaltenen Teilchen im Messgefäß $G_3$ |
| $P_{r(iesel)}$ | Teilchenimpuls des Splittteilchens bei der Durchführung des Splittrieseltests |
| $P_{S(traße)}$ | Impulse von Partikeln, wie diese bei typischen Fahrsituationen von Kraftfahrzeugen auftreten |
| V | Hauptbewegungsrichtung eines Fahrzeugs, insbesondere eines Fahrzeugs, an oder in welchem die erfindungsgemäße Borosilicatglasscheibe angebracht ist |
| S | senkrecht zur Hauptbewegungsrichtung V des Fahrzeugs aufwärts verlaufende Richtung |
| N | Richtung einer Normalen der Oberfläche 5' der Scheibe 5 im Auftreffpunkt der Teilchen 3 |
| $O_1$ | Öffnung des Messgefäß $G_1$ |
| $O_2$ | Öffnung des Messgefäß $G_2$ |
| $O_3$ | Öffnung des Messgefäß $G_3$ |
| α' | Neigungswinkel, unter welchem die Splittteilchen 3 beim Splittrieseltest auf die Scheibe 5 auftreffen |
| α | Neigungswinkel zu der senkrecht zur Hauptbewegungsrichtung V des Fahrzeugs aufwärts verlaufende Richtung S, auch vertikal verlaufende Neigung |
| ϒ | horizontal verlaufende Neigung |
| $T_1$ | Tangente an der Oberfläche 5' der Scheibe 5 zu S |
| $T_2$ | Tangente an der Oberfläche 5' der Scheibe 5 zu S |
| $α_1$ | Neigung der Tangente $T_1$ an der Oberfläche 5' der Scheibe 5 |
| $α_2$ | Neigung der Tangente $T_2$ an der Oberfläche 5' der Scheibe 5 |
| D | Dicke der Borosilicatglasscheibe 5 |
| β1 | Auftreffwinkel der Partikel aus höher als die Borosilicatglasscheibe liegendem Bereich |
| β2 | Auftreffwinkel der Partikel aus tiefer als die Borosilicatglasscheibe liegendem Bereich |

**Patentansprüche**

1. Fahrzeugscheibe, insbesondere Kraftfahrzeugscheibe, umfassend ein Borosilicatglas, insbesondere eine durch ein Floatverfahren hergestellte Borosilicatglasscheibe mit

   einer Dicke zwischen 1,1 mm und 5,4 mm,
   einem flächigen Bereich für einen diesem

   flächigen Bereich zugeordneten Sensor, insbesondere optischen Sensor, vorzugsweise bildgebenden optischen Sensor,

   bei welcher die Neigung (α) zumindest dieses flächigen Bereichs gegenüber einer senkrecht zu einer Hauptbewegungsrichtung (V) des Fahrzeugs aufwärts verlaufenden Richtung (S), insbesondere vertikal aufwärts zu einer Hauptbewegungsrichtung (V) des Fahrzeugs verlaufenden Richtung, in einem Bereich zwischen 35° und 65°, bevorzugt zwischen 40° und 60° liegt.

2. Fahrzeugscheibe umfassend ein Borosilicatglas nach Anspruch 1 , bei welcher für Fahrzeuge, insbesondere für Fahrzeuge, welche einer erhöhten Partikelbelastung ausgesetzt sind,

insbesondere für Fahrzeuge zur Verwendung in einer rauen betrieblichen Umgebung,

bei der mehr als 50 % der Partikel aus einem höher als die Borosilicatglasscheibe liegenden Bereich stammen und im Mittel mit einer Neigung gegenüber der Hauptbewegungsrichtung (V) des Fahrzeugs von $\beta1$ auftreffen,

die Neigung $\alpha$ zumindest des dem Sensor zugeordneten flächigen Bereichs gegenüber einer senkrecht zu einer Hauptbewegungsrichtung (V) des Fahrzeugs aufwärts verlaufenden Richtung (S), insbesondere vertikal aufwärts zu einer Hauptbewegungsrichtung (V) des Fahrzeugs verlaufenden Richtung, in einem Bereich zwischen 35° + $\beta1$ und 65° liegt und

wenn mehr als 50 % der Partikel aus einem tiefer als die Borosilicatglasscheibe liegenden Bereich stammen und im Mittel mit einer Neigung gegenüber der Hauptbewegungsrichtung des Fahrzeugs von $\beta2$ auftreffen,

die Neigung $\alpha$ zumindest des dem Sensor zugeordneten flächigen Bereichs gegenüber einer senkrecht zu einer Hauptbewegungsrichtung (V) des Fahrzeugs aufwärts verlaufenden Richtung (S), insbesondere vertikal aufwärts zu einer Hauptbewegungsrichtung (V) des Fahrzeugs verlaufenden Richtung, in einem Bereich zwischen 35° und 60° - $\beta2$ liegt.

3. Fahrzeugscheibe umfassend ein Borosilicatglas nach Anspruch 1 oder 2, bei welcher diese zumindest bereichsweise eine Krümmung aufweist.

4. Fahrzeugscheibe umfassend ein Borosilicatglas nach vorstehendem Anspruch, bei welcher innerhalb des einem Sensors zugeordneten flächigen Bereichs liegende Tangenten $T_1$, $T_2$ der Oberfläche der Borosilicatglasscheibe, gegenüber einer senkrecht zu einer Hauptbewegungsrichtung des Fahrzeugs aufwärts verlaufenden Richtung (S), insbesondere vertikal aufwärts zu einer Hauptbewegungsrichtung (V) des Fahrzeugs verlaufenden Richtung, eine Neigung ($\alpha$) aufweisen, die in einem Bereich zwischen 35° und 60° liegt.

5. Fahrzeugscheibe umfassend ein Borosilicatglas nach einem der vorstehenden Ansprüche, bei welcher sich der dem Sensor zugeordnete flächige Bereich innerhalb des in Einbaulage definierte oberen Drittels, bevorzugt oberen Fünftels der Borosilicatglasscheibe befindet.

6. Fahrzeugscheibe umfassend ein Borosilicatglas nach einem der vorstehenden Ansprüche, wobei die Borosilicatglasscheibe thermisch vorgespannt ist und vorzugsweise eine oberflächennahe Druckspannung von 100MPa bis 300MPa aufweist.

7. Fahrzeugscheibe umfassend ein Borosilicatglas nach einem der vorstehenden Ansprüche von 1 bis 6, wobei die Borosilicatglasscheibe chemisch vorgespannt ist und insbesondere eine oberflächennahe Druckspannung CS von 100MPa bis 300MPa und vorzugsweise eine Tiefe der Druckspannungszone DoL von 25$\mu$m bis 50$\mu$m aufweist.

8. Fahrzeugscheibe umfassend ein Borosilicatglas nach einem der vorstehenden Ansprüche von 1 bis 7, welches eine Zusammensetzung mit den folgenden Komponenten (in Gew.-%) aufweist:

| | |
|---|---|
| $SiO_2$ | 70 - 87 |
| $B_2O_3$ | 7 - 25 |
| $Na_2O + K_2O$ | 0,5 - 9 |
| $Al_2O_3$ | 0 - 7 |
| CaO | 0 - 3. |

9. Fahrzeugscheibe umfassend ein Borosilicatglas nach einem der vorstehenden Ansprüche von 1 bis 7, welches eine Zusammensetzung mit den folgenden Komponenten (in Gew.-%) aufweist:

| | |
|---|---|
| $SiO_2$ | 70-86 |

(fortgesetzt)

| | |
|---|---|
| $Al_2O_3$ | 0-5 |
| $B_2O_3$ | 9,0-25 |
| $Na_2O$ | 0,5-5,0 |
| $K_2O$ | 0-1,0 |
| $Li_2O$ | 0-1,0. |

10. Fahrzeugscheibe umfassend ein Borosilicatglas nach einem der vorstehenden Ansprüche von 1 bis 7, welches eine Zusammensetzung mit den folgenden Komponenten (in Mol.-%) aufweist:

| | |
|---|---|
| $SiO_2$ | 71,8-88,7 |
| $B_2O_3$ | 7,8-22,7 |
| $Al_2O_3$ | 0-3,1 |
| $Na_2O$ | 0,5-5,1 |
| $K_2O$ | 0-0,6 |
| $Li_2O$ | 0,0-2,1 |

wobei die Bedingung erfüllt ist, dass

$B_2O_3 + Al_2O_3 - Na_2O - K_2O - Li_2O \geq 3$ Mol-% und
$B_2O_3 + Al_2O_3 - Na_2O - K_2O - Li_2O \leq 11$ Mol-%,

bevorzugt die Bedingung erfüllt ist, dass

$B_2O_3 + Al_2O_3 - Na_2O - K_2O - Li_2O \geq 5$ Mol-% und
$B_2O_3 + Al_2O_3 - Na_2O - K_2O - Li_2O \leq 10$ Mol-%,

besonders bevorzugt die Bedingung erfüllt ist, dass

$B_2O_3 + Al_2O_3 - Na_2O - K_2O - Li_2O \geq 7$ Mol-% und
$B_2O_3 + Al_2O_3 - Na_2O - K_2O - Li_2O \leq 9$ Mol-%

und ganz besonders bevorzugt die Bedingung erfüllt ist, dass

$B_2O_3 + Al_2O_3 - Na_2O - K_2O - Li_2O \geq 9$ Mol-% und
$B_2O_3 + Al_2O_3 - Na_2O - K_2O - Li_2O \leq 10$ Mol-%.

11. Fahrzeugscheibe umfassend ein Borosilicatglas nach einem der vorstehenden Ansprüche von 1 bis 7, welches eine Zusammensetzung mit den folgenden Komponenten (in Mol.-%) aufweist:

| | |
|---|---|
| $SiO_2$ | 71,8-88,7 |
| $B_2O_3$ | 7,8-22,7 |
| $Al_2O_3$ | 0-3,1 |
| $Na_2O$ | 0,5-5,1 |
| $K_2O$ | 0-0,6 |
| $Li_2O$ | 0,0-2,1 |

wobei die Bedingung erfüllt ist, dass

$B_2O_3 + Al_2O_3 - Na_2O - K_2O - Li_2O \geq 2$ Mol-% und
$B_2O_3 + Al_2O_3 - Na_2O - K_2O - Li_2O \leq 10$ Mol-%,

bevorzugt die Bedingung erfüllt ist, dass

$B_2O_3 + Al_2O_3 - Na_2O - K_2O - Li_2O \geq 4$ Mol-% und
$B_2O_3 + Al_2O_3 - Na_2O - K_2O - Li_2O \leq 8$ Mol-%,

besonders bevorzugt die Bedingung erfüllt ist, dass

$B_2O_3 + Al_2O_3 - Na_2O - K_2O - Li_2O \geq 6$ Mol-% und
$B_2O_3 + Al_2O_3 - Na_2O - K_2O - Li_2O \leq 8$ Mol-%.

12. Fahrzeugscheibe umfassend ein Borosilicatglas nach einem der Ansprüche von 1 bis 7, umfassend ein Borosilicatglas, welches eine Zusammensetzung mit den folgenden Komponenten (in Gew.-%) aufweist:

| | |
|---|---|
| $SiO_2$ | 78,3-81,0 |
| $B_2O_3$ | 9,0-13,0 |
| $Al_2O_3$ | 3,5-5,3 |
| $Na_2O$ | 3,5-6,5 |
| $K_2O$ | 0,0-2,0 |
| CaO | 0,0-2,0. |

13. Fahrzeugscheibe umfassend ein Borosilicatglas nach einem der vorstehenden Ansprüche von 1 bis 7, welches eine Zusammensetzung mit den folgenden Komponenten (in Mol.-%) aufweist:

| | |
|---|---|
| $SiO_2$ | 80,7-84,3 |
| $B_2O_3$ | 8,0-11,6 |
| $Al_2O_3$ | 2,2-3,2 |
| $Na_2O$ | 3,5-6,5 |
| $K_2O$ | 0,2-1,3 |
| CaO | 0,0-2,2 |

wobei die Bedingung erfüllt ist, dass

$B_2O_3 + Al_2O_3 - Na_2O - K_2O - CaO \geq 3$ Mol-% und
$B_2O_3 + Al_2O_3 - Na_2O - K_2O - CaO \leq 11$ Mol-%,

bevorzugt die Bedingung erfüllt ist, dass

$B_2O_3 + Al_2O_3 - Na_2O - K_2O - CaO \geq 5$ Mol-% und
$B_2O_3 + Al_2O_3 - Na_2O - K_2O - CaO \leq 10$ Mol-%,

besonders bevorzugt die Bedingung erfüllt ist, dass

$B_2O_3 + Al_2O_3 - Na_2O - K_2O - CaO \geq 7$ Mol-% und
$B_2O_3 + Al_2O_3 - Na_2O - K_2O - CaO \leq 9$ Mol-%

und ganz besonders bevorzugt die Bedingung erfüllt ist, dass

$B_2O_3 + Al_2O_3 - Na_2O - K_2O - CaO \geq 9$ Mol-% und
$B_2O_3 + Al_2O_3 - Na_2O - K_2O - CaO \leq 10$ Mol-%.

14. Fahrzeugscheibe umfassend ein Borosilicatglas nach einem der vorstehenden Ansprüche von 1 bis 7, welches eine Zusammensetzung mit den folgenden Komponenten (in Mol.-%) aufweist:

| | |
|---|---|
| $SiO_2$ | 80,7-84,3 |
| $B_2O_3$ | 8,0-11,6 |
| $Al_2O_3$ | 2,2-3,2 |

(fortgesetzt)

| | |
|---|---|
| $Na_2O$ | 3,5-6,5 |
| $K_2O$ | 0,2-1,3 |
| CaO | 0,0-2,2 |

wobei die Bedingung erfüllt ist, dass

$B_2O_3 + Al_2O_3 - Na_2O - K_2O - CaO \geq 2$ Mol-% und
$B_2O_3 + Al_2O_3 - Na_2O - K_2O - CaO \leq 10$ Mol-%,

bevorzugt die Bedingung erfüllt ist, dass

$B_2O_3 + Al_2O_3 - Na_2O - K_2O - CaO \geq 4$ Mol-% und
$B_2O_3 + Al_2O_3 - Na_2O - K_2O - CaO \leq 8$ Mol-%,

besonders bevorzugt die Bedingung erfüllt ist, dass

$B_2O_3 + Al_2O_3 - Na_2O - K_2O - CaO \geq 6$ Mol-% und
$B_2O_3 + Al_2O_3 - Na_2O - K_2O - CaO \leq 8$ Mol-%.

15. Verbund mit wenigstens einer gefloateten Fahrzeugscheibe umfassend ein Borosilicatglas nach einem der Ansprüche von 1 bis 14, mit einer Dicke zwischen 1,1 mm und 5,4 mm, wenigstens einer weiteren Glasscheibe und wenigstens einer Kunststoffzwischenschicht.

16. Verbund nach Anspruch 15, bei welchem zwischen der Borosilicatglasscheibe und der weiteren Glasscheibe, insbesondere in oder in der Nähe der Kunststoffzwischenschicht ein Sensor, insbesondere ein optischer Sensor, zwischen der Borosilicatglasscheibe und der weiteren Scheibe angeordnet ist.

17. Anordnung vorzugsweise mit einem Verbund nach Anspruch 15 oder 16, bei welcher eine Borosilicatglasscheibe zumindest vor einem flächigen Bereich, welchem ein Sensor, insbesondere ein optischer Sensor, vorzugsweise ein bildgebender optischer Sensor, zugeordnet ist, angeordnet ist.

18. Anordnung mit einem Verbund nach Anspruch 15 oder 16, bei welcher die Kunststoffzwischenschicht getönt ist.

19. Kraftfahrzeugscheibe nach einem der Ansprüche von 1 bis 14, Verbund nach einem der Ansprüche 15 oder 16 oder Anordnung nach Anspruch 17 oder 18, bei welcher ein Sensor, insbesondere ein optischer Sensor, vorzugsweise ein die Helligkeit erfassender, ein bildgebender Sensor oder ein Regensensor, an dem einem Sensor zugeordneten flächigen Bereich angeordnet ist.

20. Kraftfahrzeug umfassend eine an diesem angeordnete Fahrzeugscheibe nach einem der Ansprüche 1 bis 14, einen Verbund nach Anspruch 15 oder 16 oder eine Anordnung mit einem Verbund nach Anspruch 17 oder 18.

21. Kraftfahrzeug nach vorstehendem Anspruch, bei welchem die Kraftfahrzeugscheibe eine Frontscheibe ist.

Figur 1

Figur 2

Figur 3

$P_{S(traße)}$

$P_{S(traße)}$

$T_2$

$T_1$

α2

α1

Fahrtrichtung

z

-x

Y

S   S   V

7   8   5   5′   9   20   11   19   13   10   6

Figur 4

$P_{S(traße)}$

8   5′   V   N   γ

5   11

13   12   14

-y

Z, S   X

Figur 5

Figur 6

Figur 7

| Kalk-Natron-Glas | Borosilicatglas |
|---|---|
| 15° | |
| 30° | |
| 45° | |
| 60° | |

Maßstab gültig für alle Abbildungen          1 mm

Figur 8

| Kalk-Natron-Glas, thermisch vorgespannt | Borosilicatglas, thermisch vorgespannt |
|---|---|
| 15° | |
| 30° | |
| 45° | |
| 60° | |

Maßstab gültig für alle Abbildungen          1 mm

Figur 9

Ergebnisse Splittrieseltest (0,25kg Basaltsplitt)

Figur 10

Ergebnisse Splittrieseltest (0,5kg Basaltsplitt)

Figur 11

**Ergebnisse Splittrieseltest (0,5kg Basaltsplitt)**

Kalk-Natron-Glas - thermisch vorgespannt

Borosilicatglas – thermisch vorgespannt

G

Neigung α (°)

Figur 12

D

5

8

5′

15

11

12

13

14

α

$P_{S(traße)}$

β1

β2

z

S

V

Fahrtrichtung

-x

Y

Figur 13

Figur 14

**EUROPÄISCHER RECHERCHENBERICHT**

Nummer der Anmeldung

EP 21 19 2720

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 20 2009 018502 U1 (SAINT-GOBAIN SEKURIT DEUTSCHLAND GMBH & CO. KG [DE]) 22. Dezember 2011 (2011-12-22) | 1,5, 19-21 | INV. B32B17/10 |
| Y | * Absatz [0002]; Ansprüche 1,2; Abbildungen 1,2,3 * | 8-14 | |
| | ----- | | |
| X | WO 2020/025360 A1 (AGC GLASS EUROPE [BE]) 6. Februar 2020 (2020-02-06) | 1,3,5, 15,19-21 | |
| Y | * Seite 2, Zeile 3 - Zeile 8; Ansprüche | 8-14 | |
| A | 1,5; Abbildung 2 * | 2,4,6,7, | |
| | * Seite 4, Zeile 23 - Zeile 27 * | 16-18 | |
| | ----- | | |
| Y | US 2016/263969 A1 (LESTRINGANT CLAIRE [FR] ET AL) 15. September 2016 (2016-09-15) * Absatz [0003] * * Absatz [0023] - Absatz [0038]; Ansprüche; Abbildungen 1,2 * | 1,8-15, 19-21 | |
| | ----- | | |
| Y | US 2018/154615 A1 (DOHN PAUL BENNETT [US] ET AL) 7. Juni 2018 (2018-06-07) * Absatz [0055] - Absatz [0072]; Beispiele; Tabelle 1 * | 1,8-15, 19-21 | RECHERCHIERTE SACHGEBIETE (IPC) |
| | ----- | | B32B F41H |
| A | EP 3 489 053 A1 (NIPPON SHEET GLASS CO LTD [JP]) 29. Mai 2019 (2019-05-29) * Absatz [0070]; Ansprüche * | 1,15-21 | |
| | ----- | | |
| X | US 6 236 391 B1 (KENT JOEL [US] ET AL) 22. Mai 2001 (2001-05-22) * Spalte 18, Zeile 33 - Spalte 19, Zeile 27; Beispiel 2 * | 17 | |
| | ----- | | |

Der vorliegende Recherchenbericht wurde für alle Patentansprüche erstellt

| Recherchenort | Abschlußdatum der Recherche | Prüfer |
|---|---|---|
| **München** | **14. Januar 2022** | **Lindner, Thomas** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

\.......................................................................................
& : Mitglied der gleichen Patentfamilie, übereinstimmendes Dokument

**ANHANG ZUM EUROPÄISCHEN RECHERCHENBERICHT**
**ÜBER DIE EUROPÄISCHE PATENTANMELDUNG NR.**                    EP 21 19 2720

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2022

| Im Recherchenbericht angeführtes Patentdokument | Datum der Veröffentlichung | Mitglied(er) der Patentfamilie | Datum der Veröffentlichung |
|---|---|---|---|
| DE 202009018502 U1 | 22-12-2011 | KEINE | |
| WO 2020025360 A1 | 06-02-2020 | CN 112585006 A | 30-03-2021 |
| | | EP 3829865 A1 | 09-06-2021 |
| | | JP 2021533069 A | 02-12-2021 |
| | | US 2021308990 A1 | 07-10-2021 |
| | | WO 2020025360 A1 | 06-02-2020 |
| US 2016263969 A1 | 15-09-2016 | BR 112016006184 A2 | 01-08-2017 |
| | | CA 2925065 A1 | 30-04-2015 |
| | | CN 104755264 A | 01-07-2015 |
| | | CN 107856372 A | 30-03-2018 |
| | | EA 201690824 A1 | 31-08-2016 |
| | | EP 3060396 A1 | 31-08-2016 |
| | | ES 2688892 T3 | 07-11-2018 |
| | | FR 3012071 A1 | 24-04-2015 |
| | | JP 6738272 B2 | 12-08-2020 |
| | | JP 6970778 B2 | 24-11-2021 |
| | | JP 2016540716 A | 28-12-2016 |
| | | JP 2020117437 A | 06-08-2020 |
| | | KR 20160077061 A | 01-07-2016 |
| | | PL 3060396 T3 | 31-01-2019 |
| | | PT 3060396 T | 08-11-2018 |
| | | US 2016263969 A1 | 15-09-2016 |
| | | WO 2015059406 A1 | 30-04-2015 |
| US 2018154615 A1 | 07-06-2018 | CN 107848267 A | 27-03-2018 |
| | | EP 3302968 A1 | 11-04-2018 |
| | | JP 6768009 B2 | 14-10-2020 |
| | | JP 2018526303 A | 13-09-2018 |
| | | KR 20180015713 A | 13-02-2018 |
| | | TW 201704009 A | 01-02-2017 |
| | | US 2018154615 A1 | 07-06-2018 |
| | | WO 2016196546 A1 | 08-12-2016 |
| EP 3489053 A1 | 29-05-2019 | CN 109476217 A | 15-03-2019 |
| | | EP 3489053 A1 | 29-05-2019 |
| | | JP 6886466 B2 | 16-06-2021 |
| | | JP WO2018016453 A1 | 09-05-2019 |
| | | US 2019315202 A1 | 17-10-2019 |
| | | WO 2018016453 A1 | 25-01-2018 |
| US 6236391 B1 | 22-05-2001 | AU 732877 B2 | 03-05-2001 |
| | | BR 9809121 A | 01-08-2000 |
| | | CA 2288066 A1 | 19-11-1998 |
| | | CN 1269043 A | 04-10-2000 |

Für nähere Einzelheiten zu diesem Anhang : siehe Amtsblatt des Europäischen Patentamts, Nr.12/82

Seite 1 von 2

EPO FORM P0461

**ANHANG ZUM EUROPÄISCHEN RECHERCHENBERICHT**
**ÜBER DIE EUROPÄISCHE PATENTANMELDUNG NR.**                EP 21 19 2720

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2022

| Im Recherchenbericht angeführtes Patentdokument | Datum der Veröffentlichung | Mitglied(er) der Patentfamilie | | Datum der Veröffentlichung |
|---|---|---|---|---|
| | | EP | 1019897 A1 | 19-07-2000 |
| | | EP | 2287714 A1 | 23-02-2011 |
| | | IL | 132643 A | 31-10-2003 |
| | | KR | 19980087028 A | 05-12-1998 |
| | | US | 6236391 B1 | 22-05-2001 |
| | | WO | 9852184 A1 | 19-11-1998 |

Für nähere Einzelheiten zu diesem Anhang : siehe Amtsblatt des Europäischen Patentamts, Nr.12/82

EPO FORM P0461

Seite 2 von 2

**EP 3 960 441 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **SEBASTIAN BRUNS ; TOBIAS UESBECK ; DOMINIK WEIL ; DORIS MÖNCKE ; LEO VAN WÜLLEN.** Karsten Durst und Dominique de Ligny, Influence of Al2O3 Addition on Structure and Mechanical Properties of Borosilicate Glasses. *Front. Mater.,* 28. Juli 2020

- Quantitative Evaluation of Densification and Crack Resistance in Silicate Glasses. **CHRISTIAN HERMANSEN.** Master Thesis. Aalborg University, 05. Juli 2011

29